# EUROPEAN PATENT APPLICATION

(11) **EP 4 818 854 A1**
(43) Date of publication of application: **07.10.2026**
(21) Application number: 25890573.6
(22) Date of filing: 21.03.2025
(51) Int. Cl.: G06F 3/01

(54) **CROSS-DEVICE RESOURCE SHARING METHOD AND ELECTRONIC DEVICE**

(30) Priority: 15.11.2024 CN 202411642132
(71) Applicant: Huawei Technologies Co., Ltd., Shenzhen, Guangdong 518129 (CN)
(72) Inventor: WANG, Chunfeng, Shenzhen, Guangdong 518129 (CN); DONG, Jiyang, Shenzhen, Guangdong 518129 (CN); WANG, Xiaomei, Shenzhen, Guangdong 518129 (CN); WEN, Xing, Shenzhen, Guangdong 518129 (CN); SHEN, Jianxun, Shenzhen, Guangdong 518129 (CN)
(74) Representative: Gill Jennings & Every LLP
(86) International application number: PCT/CN2025/084182
(87) International publication number: WO 2026/102974

(57) **Abstract**

A cross-device resource sharing method and an electronic device are provided, which relate to the field of electronic device technologies, to improve convenience and intelligence of cross-device resource sharing. The method includes: When displaying a first interface of a first application, a first electronic device sends an indication message to at least one electronic device in response to a detected resource sending gesture. First content is displayed in the first interface. The resource sending gesture indicates the first electronic device to share a resource with another electronic device, and the resource sending gesture is a gesture performed without coming into contact with a display screen of the first electronic device. The indication message indicates that the first electronic device is about to share a resource. The first electronic device may send the first content to a second electronic device in the at least one electronic device based on a communication connection to the second electronic device.

## Description

### CROSS-DEVICE RESOURCE SHARING METHOD AND ELECTRONIC DEVICE

This application claims priority to Chinese Patent Application No. 202411642132.4, filed with the China National Intellectual Property Administration on November 15, 2024 and entitled "CROSS-DEVICE RESOURCE SHARING METHOD AND ELECTRONIC DEVICE", which is incorporated herein by reference in its entirety.

### TECHNICAL FIELD

This application relates to the field of electronic device technologies, and in particular, to a cross-device resource sharing method and an electronic device.

### BACKGROUND

With rapid development of electronic device technologies, an electronic device has increasingly rich functions, and a user has increasingly diversified requirements for the electronic device. Currently, when using the electronic device, the user may expect to share a resource (for example, including but not limited to various resources such as a picture, a video, and news) in the electronic device with a friend, so that a recipient such as the friend can enjoy good browsing experience. Therefore, it is crucial to improve convenience and intelligence of cross-device resource sharing.

### SUMMARY

This application provides a cross-device resource sharing method and an electronic device, to improve convenience and intelligence of cross-device resource sharing.

To achieve the foregoing objective, this application uses the following technical solutions.

According to a first aspect, a cross-device resource sharing method is provided, and applied to a first electronic device having a display screen. The method includes: when a first interface of a first application is displayed, sending an indication message to at least one electronic device in response to a detected resource sending gesture, where first content is displayed in the first interface, the resource sending gesture indicates the first electronic device to share a resource with another electronic device, the resource sending gesture is a gesture performed without coming into contact with the display screen of the first electronic device, and the indication message indicates that the first electronic device is about to share a resource; and sending the first content to a second electronic device in the at least one electronic device based on a communication connection to the second electronic device.

Based on the foregoing technical solution, when an interface of an application is displayed, after detecting the resource sending gesture performed without coming into contact with the screen of the electronic device, the electronic device may send the indication message indicating that the electronic device is about to share a resource to another electronic device, and then may share content in the displayed interface with an electronic device based on a communication connection to the electronic device. A user does not need to perform various operations of touching the screen of the electronic device. Therefore, even in a scenario in which the screen of the electronic device cannot be touched, for example, fingers of the user are wet, cross-device resource sharing can be implemented. In addition, a resource sending end and a resource receiving end do not need to come into contact with each other, thereby improving convenience and intelligence of cross-device resource sharing.

In a possible design, the method further includes: when a second interface of the first application is displayed, sending the indication message to the at least one electronic device in response to the detected resource sending gesture, where the second interface is different from the first interface; and sending a screenshot of the second interface to the second electronic device in the at least one electronic device based on the communication connection to the second electronic device.

In this way, when an interface of an application does not support a cross-device resource sharing function, if the user performs the resource sending gesture on the resource sending end, the resource sending end may send the indication message to an external device to indicate that the resource sending end is about to send a resource. The resource sending end may send a resource in the interface of the application to the resource receiving end by using a screenshot. In this way, cross-device resource sharing can be more convenient and intelligent, and even if an interface of an application does not support an air sharing service, cross-device resource sharing can be implemented by using a screenshot, thereby ensuring user experience.

In a possible design, the method further includes: when an interface of a second application is displayed, sending the indication message to the at least one electronic device in response to the detected resource sending gesture, where the second application is different from the first application; and sending a screenshot of the interface to the second electronic device in the at least one electronic device based on the communication connection to the second electronic device.

In this way, when an application does not support a cross-device resource sharing function, if the user performs the resource sending gesture on the resource sending end, the resource sending end may send the indication message to an external device to indicate that the resource sending end is about to send a resource. The resource sending end may send a resource in the application to the resource receiving end by using a screenshot. In this way, cross-device resource sharing can be more convenient and intelligent, and even if an application does not support the cross-device resource sharing function, cross-device resource sharing can be implemented by using a screenshot, thereby ensuring user experience.

In a possible design, sending the first content to the second electronic device in the at least one electronic device based on the communication connection to the second electronic device includes: sending the first content to the second electronic device in the at least one electronic device based on the communication connection to the second electronic device, and sending the first content to a third electronic device in the at least one electronic device based on a communication connection to the third electronic device. In this way, a resource in one electronic device can be simultaneously received by a plurality of other electronic devices, thereby implementing simultaneous resource sharing with the plurality of other electronic devices.

In a possible design, sending the first content to the second electronic device in the at least one electronic device based on the communication connection to the second electronic device includes: establishing the communication connection to the second electronic device based on the indication message; and sending the first content to the second electronic device based on the communication connection. In this way, after sending the indication message, the resource sending end can establish a communication connection to the second electronic device based on the indication message, and then when there are a plurality of other electronic devices, can determine a specific electronic device with which the resource is to be shared.

In a possible design, the resource sending gesture includes a start gesture and an end gesture, the start gesture indicates a start of execution of the resource sending gesture, and the end gesture indicates an end of execution of the resource sending gesture; and before sending the first content to the second electronic device based on the communication connection, the method further includes: generating preview data of the first content when the start gesture is detected; and sending the preview data of the first content to the second electronic device based on the communication connection. In this way, the resource sending end generates the preview data of the first content when detecting the start gesture in the resource sending gesture. Subsequently, after the first electronic device establishes the communication connection to the second electronic device, the operation of generating the preview data of the first content no longer needs to be performed again, and the preview data of the first content is directly sent. In this way, a user-perceived delay can be reduced, and user experience can be improved.

In a possible design, sending the indication message to the at least one electronic device in response to the detected resource sending gesture includes: sending the indication message to the at least one electronic device in response to detecting the start gesture and the end gesture.

In a possible design, the method further includes: when the start gesture is detected, displaying a gesture icon corresponding to the start gesture; or displaying a gesture movement animation effect when it is detected that the end gesture moves out from a front of the first electronic device, where the gesture movement animation effect includes an animation effect of movement of a light shadow on the display screen. The gesture icon corresponding to the start gesture is displayed when the start gesture is detected, and the user may determine, based on the gesture icon, that the electronic device starts to recognize the resource sending gesture. When the end gesture moves out from the front of the electronic device, the electronic device may further present the animation effect of movement of the light shadow on the display screen, that is, the light shadow may change with a change of a position of the end gesture in front of the electronic device, thereby improving a sense of science and technology of human-computer interaction.

Positions at which light shadows 711 and 720 are displayed on a display screen of an electronic device 10 may change in real time with a real-time change of a position of a fist in an air grab gesture in front of the electronic device 10. Therefore, the electronic device 10 may provide the user with experience that the light shadows 711 and 720 are controlled in air by the fist of the user, thereby improving a sense of science and technology of human-computer interaction, and improving user experience when the user uses the electronic device to perform cross-device resource sharing.

In a possible design, a direction in which the light shadow moves on the display screen is the same as a direction in which the end gesture moves out from the front of the first electronic device. In this way, the light shadow in the gesture movement animation effect can move in the direction in which the end gesture moves out. Therefore, the user may be provided with experience that the light shadow is operated in air by the end gesture of the user, thereby improving a sense of science and technology of human-computer interaction, and improving user experience when the user uses the electronic device to perform cross-device resource sharing.

In a possible design, after detecting the resource sending gesture, the method further includes: displaying a first to-be-sent animation effect, where the first to-be-sent animation effect includes at least one of: a card generated based on the first content and a light shadow. In this way, after detecting the resource sending gesture, the electronic device presents the to-be-sent animation effect, so that the user can learn that the electronic device currently responds to a cross-device resource sharing requirement of the user.

In a possible design, in a process of sending the first content to the second electronic device, the method further includes: displaying a sending animation effect, where the sending animation effect includes at least one of: the preview data of the first content and a light shadow; and/or displaying a target control, where the target control indicates sending progress of the first content. In this way, in a process of sharing a resource with another electronic device, the electronic device may further display a sending animation effect including preview data of the shared resource, a light shadow, and the like, so that the user can learn of the currently shared resource. The target control is presented to indicate the resource sending progress to the user, thereby improving a sense of science and technology of human-computer interaction.

In a possible design, after detecting the resource sending gesture, the method further includes: displaying a second to-be-sent animation effect, where the second to-be-sent animation effect includes at least one of: a screenshot of the second interface and a light shadow.

In a possible design, system accounts logged in to on the first electronic device and the second electronic device are different, and before sending the first content to the second electronic device, the method further includes: displaying a reminder message when no trust relationship is established between the first electronic device and the second electronic device, where the reminder message is used to confirm with a user at least one of the following: whether to send the first content to the second electronic device and whether to establish a trust relationship with the second electronic device; or skipping displaying a reminder message when a trust relationship is established between the first electronic device and the second electronic device, where the reminder message is used to confirm with a user at least one of the following: whether to send the first content to the second electronic device and whether to establish a trust relationship with the second electronic device. In this way, when the system accounts logged in to on the first electronic device and the second electronic device are different, if no trust relationship is established between the first electronic device and the second electronic device, at least one of the following may be confirmed with the user: whether to send the resource to the second electronic device and whether to establish a trust relationship with the second electronic device. This can improve security of cross-device resource sharing. However, when the trust relationship is established between the first electronic device and the second electronic device, the first electronic device may no longer output the reminder message, and the first electronic device and the second electronic device may directly perform cross-device resource sharing. In this way, the user is not disturbed while security of cross-device resource sharing is ensured, and the user is provided with imperceptible sharing experience.

In a possible design, the first electronic device includes an air sharing service, and the air sharing service is used to provide an application, registering with the air sharing service, in the first electronic device with a function of sharing a resource in the application with another electronic device; and the first application is an application registering with the air sharing service, the first interface of the first application is a preset interface in which the air sharing service is available, and the second interface of the first application is a preset interface in which the air sharing service is unavailable; or the second application is an application that does not register with the air sharing service. In this way, when an application registers with the air sharing service, cross-device resource sharing may be directly implemented by using the air sharing service, and the application may further set a specific interface in which the air sharing service is available. On the contrary, when an application does not register with the air sharing service, cross-device resource sharing cannot be directly implemented by using the air sharing service.

In a possible design, the resource sending gesture includes a palm-to-fist gesture.

According to a second aspect, a cross-device resource sharing method is provided, and applied to a second electronic device having a display screen. The method includes: receiving an indication message from a first electronic device, where the indication message from the first electronic device indicates that the first electronic device is about to share a resource; and receiving first content from the first electronic device based on a communication connection to the first electronic device in response to the indication message from the first electronic device and a detected resource receiving gesture, where the resource receiving gesture is a gesture performed without coming into contact with the display screen of the second electronic device, and the first content is content in a first interface that is of a first application and that is displayed by the first electronic device.

In a possible design, the method further includes: receiving a screenshot of a second interface from the first electronic device based on the communication connection to the first electronic device in response to the indication message from the first electronic device and the detected resource receiving gesture, where the screenshot of the second interface is a screenshot of a second interface that is of the first application and that is displayed by the first electronic device, and the second interface is different from the first interface.

In a possible design, the method further includes: receiving a screenshot of an interface from the first electronic device based on the communication connection to the first electronic device in response to the indication message from the first electronic device and the detected resource receiving gesture, where the screenshot of the interface is a screenshot of an interface that is of a second application and that is displayed by the first electronic device, and the second application is different from the first application.

In a possible design, before receiving the first content from the first electronic device, the method further includes: receiving an indication message from a third electronic device, where the indication message from the third electronic device indicates that the third electronic device is about to share a resource; and receiving the first content from the first electronic device based on the communication connection to the first electronic device in response to the indication message from the first electronic device and the detected resource receiving gesture includes: receiving the first content from the first electronic device based on the communication connection to the first electronic device in response to the indication message from the first electronic device, the indication message from the third electronic device, and the detected resource receiving gesture, where system accounts logged in to on the first electronic device and the second electronic device are the same; or system accounts logged in to on the first electronic device and the second electronic device are different, and the first electronic device is an electronic device selected by a user.

In this way, when there are a plurality of resource sending ends, a resource receiving end may choose to receive a resource of a same system account, thereby improving security and privacy of cross-device resource sharing. Alternatively, a resource receiving end may receive a resource from a corresponding resource sending end based on selection of the user, to meet an actual requirement of the user.

In a possible design, before receiving the first content from the first electronic device, the method further includes: detecting the resource receiving gesture at a first frequency when the indication message from the first electronic device is not received; and detecting the resource receiving gesture at a second frequency when the indication message from the first electronic device is received, where the second frequency is greater than the first frequency. In this way, a frequency that is of detecting the resource receiving gesture and that is used before the resource receiving end receives an indication from the resource sending end is less than a frequency used after the indication message is received. That is, after receiving the indication message, the resource receiving end may increase the frequency of detecting the resource receiving gesture, so that the resource receiving gesture can be more quickly and accurately recognized, thereby improving efficiency of cross-device resource sharing, and improving intelligence of cross-device resource sharing.

In a possible design, the resource receiving gesture includes a start gesture and an end gesture, the start gesture indicates a start of execution of the resource receiving gesture, and the end gesture indicates an end of execution of the resource receiving gesture; and before receiving the first content from the first electronic device based on the communication connection to the first electronic device, the method further includes: establishing the communication connection to the first electronic device in response to the detected start gesture. In this way, when detecting the start gesture in the resource receiving gesture, the resource receiving end establishes a communication connection to the resource sending end, that is, establishes a connection in advance. Compared with a manner in which a communication connection starts to be established after the end gesture is received, this can reduce a user-perceived delay, and improve user experience.

In a possible design, the resource receiving gesture includes the start gesture and the end gesture, the start gesture indicates the start of execution of the resource receiving gesture, and the end gesture indicates the end of execution of the resource receiving gesture; and the method further includes: when the start gesture is detected, displaying a gesture icon corresponding to the start gesture; or displaying a gesture movement animation effect when it is detected that the start gesture moves in from a front of the second electronic device, where the gesture movement animation effect includes an animation effect of movement of a light shadow on the display screen.

In a possible design, a direction in which the light shadow moves on the display screen is the same as a direction in which the start gesture moves in from the front of the second electronic device.

In a possible design, before receiving the first content from the first electronic device, the method further includes: in response to the indication message from the first electronic device, when the end gesture is detected, receiving preview data of the first content from the first electronic device based on the communication connection to the first electronic device.

In a possible design, the method further includes: displaying a receiving animation effect in a process of receiving the first content, where the receiving animation effect includes at least one of: the preview data of the first content and a light shadow.

In a possible design, the system accounts logged in to on the first electronic device and the second electronic device are different, and before receiving the first content from the first electronic device, the method further includes: displaying a reminder message when no trust relationship is established between the first electronic device and the second electronic device, where the reminder message is used to confirm with the user at least one of the following: whether to receive the first content from the first electronic device and whether to establish a trust relationship with the first electronic device; or skipping displaying a reminder message when a trust relationship is established between the first electronic device and the second electronic device, where the reminder message is used to confirm with the user at least one of the following: whether to receive the first content from the first electronic device and whether to establish a trust relationship with the first electronic device.

In a possible design, the resource receiving gesture includes a fist-to-palm gesture.

According to a third aspect, an electronic device is provided. The electronic device has a function of implementing the method in any design of any one of the foregoing aspects. The function may be implemented by hardware, or may be implemented by executing corresponding software by hardware. The hardware or the software includes one or more modules corresponding to the function.

According to a fourth aspect, an electronic device is provided, including a processor, a memory, a display screen, and a communication interface. The memory, the display screen, and the communication interface are coupled to the processor. The communication interface is configured to communicate with another device. The memory is configured to store program code, and the program code includes instructions. The processor reads the instructions from the memory, to enable the electronic device to perform the method in any design of any one of the foregoing aspects. Optionally, the memory may be coupled to the processor, or may be independent of the memory. For example, the communication interface may be a transceiver, an input/output interface, an interface circuit, an output circuit, an input circuit, a pin, a related circuit, or the like. The display screen may be used by the electronic device to perform a display operation.

According to a fifth aspect, a computer-readable storage medium is provided. The computer-readable storage medium includes a computer program. When the computer program is run on an electronic device, the electronic device is enabled to perform the method in any design of any one of the foregoing aspects.

According to a sixth aspect, a computer program product is provided. The computer program product includes a computer program or instructions. When the computer program or the instructions are run on a computer, the computer is enabled to perform the method in any design of any one of the foregoing aspects.

According to a seventh aspect, a chip system is provided, including at least one processor and at least one interface circuit. The at least one interface circuit is configured to: perform a transceiver function, and send instructions to the at least one processor. When the at least one processor executes the instructions, the at least one processor performs the method in any design of any one of the foregoing aspects.

According to an eighth aspect, a communication system is provided, including a first electronic device and a second electronic device. The first electronic device is configured to perform the method performed by the first electronic device in any design of any one of the foregoing aspects, and the second electronic device is configured to perform the method performed by the second electronic device in any one of the foregoing aspects and any design of any one of the foregoing aspects.

For technical effects of the foregoing aspects, refer to each other. Details are not described herein.

### BRIEF DESCRIPTION OF DRAWINGS

FIG. 1(1), FIG. 1(2), FIG. 1(3), and FIG. 1(4) are a diagram of a cross-device resource sharing scenario according to an embodiment of this application;
FIG. 2(1), FIG. 2(2), and FIG. 2(3) are a diagram of a scenario of operating an electronic device in air according to an embodiment of this application;
FIG. 3 is a diagram of another cross-device resource sharing scenario according to an embodiment of this application;
FIG. 4 is a diagram of an architecture of a communication system according to an embodiment of this application;
FIG. 5 is a diagram of a structure of an electronic device according to an embodiment of this application;
FIG. 6 is a diagram of a structure of another electronic device according to an embodiment of this application;
FIG. 7(1), FIG. 7(2), FIG. 7(3), FIG. 7(4), and FIG. 7(5) are a diagram 1 of an interface according to an embodiment of this application;
FIG. 8(1) and FIG. 8(2) are a diagram 2 of an interface according to an embodiment of this application;
FIG. 9(1), FIG. 9(2), FIG. 9(3), and FIG. 9(4) are a diagram 3 of an interface according to an embodiment of this application;
FIG. 10(1) and FIG. 10(2) are a diagram 4 of an interface according to an embodiment of this application;
FIG. 11(1), FIG. 11(2), and FIG. 11(3) are a diagram 5 of an interface according to an embodiment of this application;
FIG. 12(1), FIG. 12(2), FIG. 12(3), and FIG. 12(4) are a diagram 6 of an interface according to an embodiment of this application;
FIG. 13(1), FIG. 13(2), and FIG. 13(3) are a diagram 7 of an interface according to an embodiment of this application;
FIG. 14(1), FIG. 14(2), and FIG. 14(3) are a diagram 8 of an interface according to an embodiment of this application;
FIG. 15 is a diagram of an information receiving sequence of an electronic device according to an embodiment of this application;
FIG. 16 is a diagram 9 of an interface according to an embodiment of this application;
FIG. 17 is a schematic flowchart of a cross-device resource sharing method according to an embodiment of this application;
FIG. 18 is a diagram of an execution sequence of steps included in a cross-device resource sharing method according to an embodiment of this application;
FIG. 19A, FIG. 19B, and FIG. 19C are a schematic flowchart of another cross-device resource sharing method according to an embodiment of this application;
FIG. 20 is a diagram of a structure of another electronic device according to an embodiment of this application; and
FIG. 21 is a diagram of a structure of a chip system according to an embodiment of this application.

### DESCRIPTION OF EMBODIMENTS

In the descriptions of this application, unless otherwise specified, "/" indicates an "or" relationship between associated objects. For example, A/B may indicate A or B. In this application, "and/or" merely describes an association relationship between associated objects and indicates that three relationships may exist. For example, A and/or B may indicate three cases: Only A exists, both A and B exist, and only B exists, where A and B may be singular or plural.

In the descriptions of this application, unless otherwise specified, "a plurality of" means two or more. "At least one of the following" or a similar expression thereof indicates any combination of these items, including a single item or any combination of a plurality of items. For example, at least one of a, b, or c may indicate a, b, c, a and b, a and c, b and c, and a, b, and c, where a, b, and c may be singular or plural.

In addition, to clearly describe the technical solutions in embodiments of this application, terms such as "first" and "second" are used in embodiments of this application to distinguish between same items or similar items that provide basically same functions and roles. A person skilled in the art may understand that the terms such as "first" and "second" do not limit a quantity or an execution sequence, and the terms such as "first" and "second" do not indicate a definite difference.

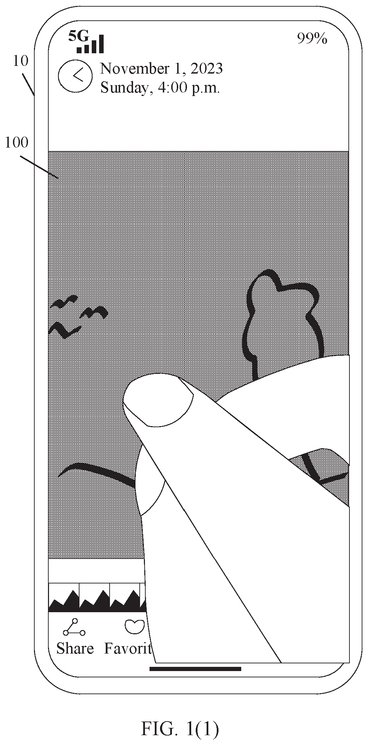

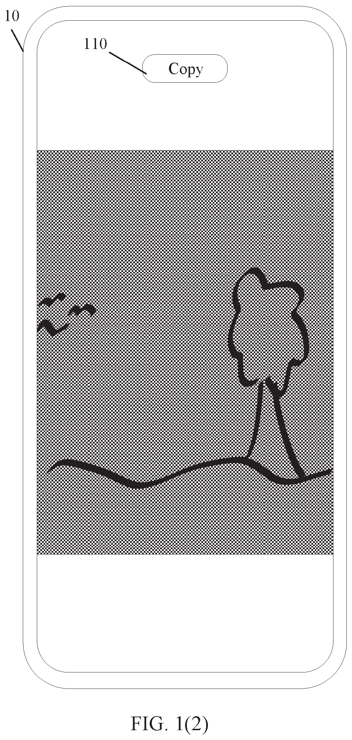

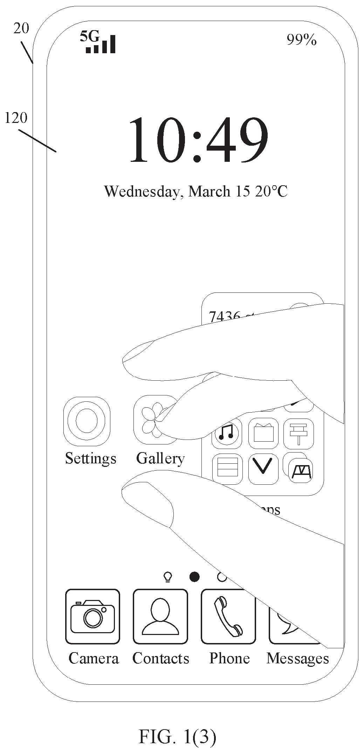

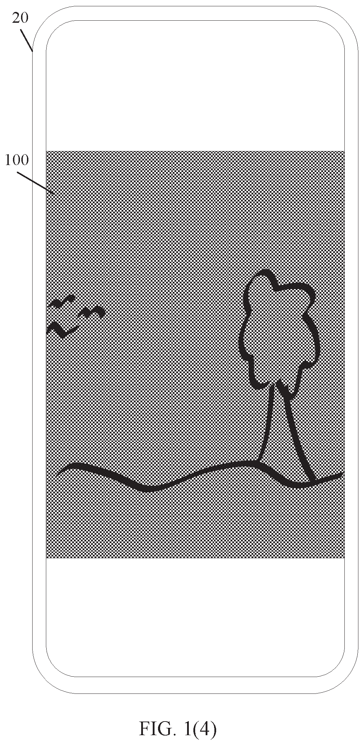

Cross-device resource sharing (which may also be referred to as cross-end resource sharing) means to share a resource in an electronic device with another electronic device. In a possible solution, as shown in FIG. 1(1), an electronic device 10 displays a picture 100, and a user may perform a three-finger screen touch and pinch operation on the picture 100, to share the picture 100 with another electronic device. In response to the operation, as shown in FIG. 1(2), the electronic device 10 may display a copy button 110. In addition, as shown in FIG. 1(3), an electronic device 20 displays a home screen 120. Then, the user may perform a three-finger screen touch and release operation on the home screen 120. In response to the operation and the three-finger screen touch and pinch operation performed on the electronic device 10, the electronic device 10 may send the picture 100 to the electronic device 20. Correspondingly, the electronic device 20 may receive the picture from the electronic device 10. Then, as shown in FIG. 1(4), the electronic device 20 may display the picture 100, thereby implementing sharing of a resource in the electronic device 10 with the electronic device 20.

In this solution, the user needs to touch a screen of the electronic device with three fingers to implement resource sharing. However, in some scenarios, for example, in a scenario in which the user performs an operation in a kitchen and fingers are wet, the user possibly cannot perform a three-finger screen touch operation. Consequently, cross-device resource sharing cannot be implemented. In addition, in this solution, when the electronic device 20 presents an interface (for example, a video interface) other than the home screen, the user needs to first perform various screen touch operations, so that the electronic device 20 can first present the home screen. This makes a resource sharing process lengthy. Therefore, currently, this solution supports use only when system accounts logged in to on the electronic device 10 and the electronic device 20 are the same, resulting in low convenience and intelligence of cross-device resource sharing.

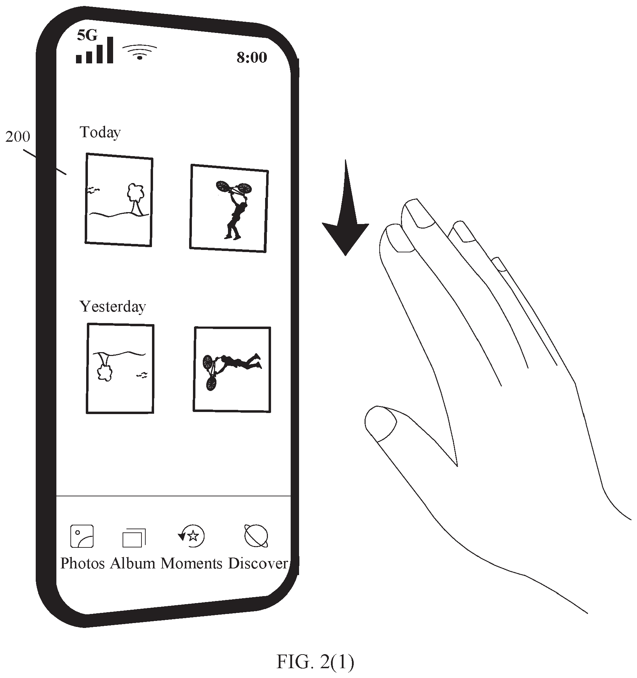

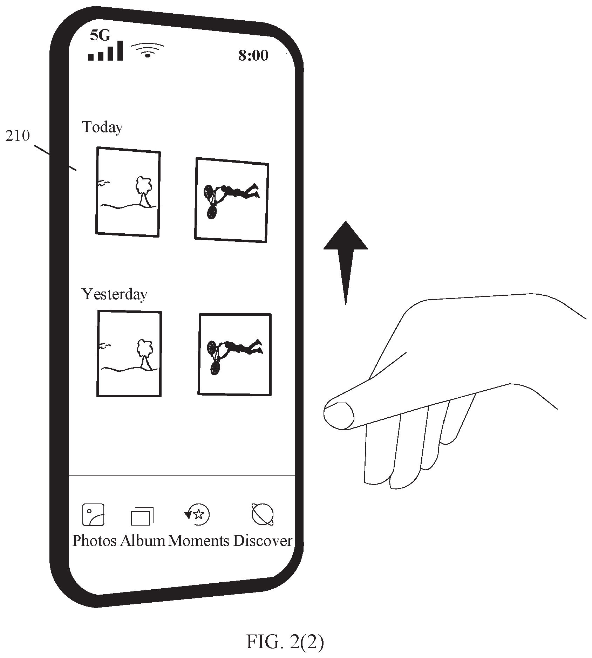

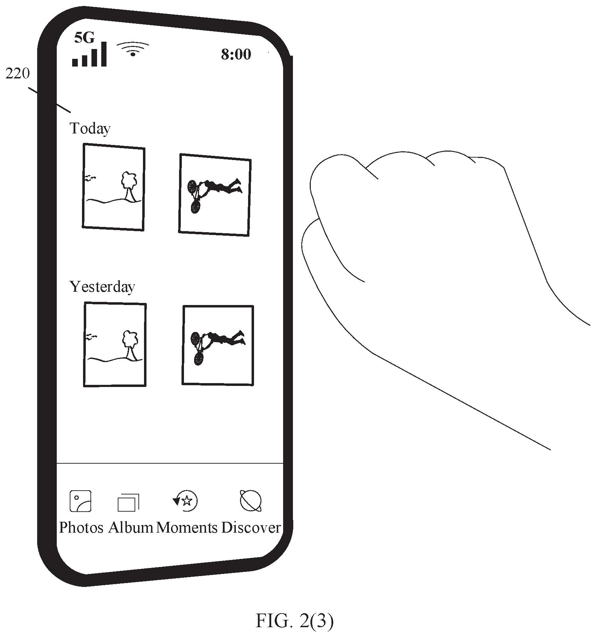

In another possible solution, an electronic device may support an air operation performed by a user, for example, air screen sliding or air screen grab. For example, as shown in FIG. 2(1), the electronic device may display an interface 200 of a gallery application. The user may hold a center of a palm directly facing the electronic device, with fingertips facing upward, and then wave a wrist downward. In response to the operation, a screen of the electronic device may be slid downward. Alternatively, as shown in FIG. 2(2), the electronic device may display an interface 210 of a gallery application. The user may hold a back of a hand directly facing the electronic device, with fingertips facing downward, and then wave a wrist upward. In response to the operation, a screen of the electronic device may be slid upward. Alternatively, as shown in FIG. 2(3), the electronic device may display an interface 220 of a gallery application. The user may hold a center of a palm directly facing a screen, and then grab and make a fist. In response to the operation, the electronic device may generate a screenshot of the interface 220. In this solution, although an air operation on the electronic device can be implemented, but cross-device resource sharing cannot be implemented.

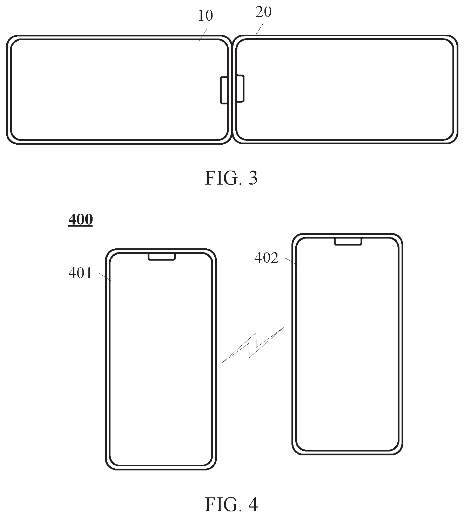

In another possible solution, two electronic devices may share contact information through proximity recognition using a short-range wireless communication technology (near field communication, NFC). As shown in FIG. 3, a head of the electronic device 10 and a head of the electronic device 20 are made to come into contact with each other to implement mutual sharing of contact information. In this solution, heads of different electronic devices need to come into contact with each other to implement resource sharing. In other words, when there is a specific distance between electronic devices, resource sharing cannot be completed, resulting in poor convenience and intelligence.

Based on this, embodiments of this application provide a cross-device resource sharing method, to improve convenience and intelligence of cross-device resource sharing. The technical solutions provided in embodiments of this application may be applied to various resource sharing scenarios. For example, the resource may include but is not limited to various resources such as a picture, a video, and news.

For example, FIG. 4 is a diagram of an architecture of a communication system to which a cross-device resource sharing method is applied according to an embodiment of this application. As shown in FIG. 4, the communication system 400 may include a first electronic device 401 and a second electronic device 402.

In some embodiments, the first electronic device 401 may serve as a resource sending end to send a resource to the second electronic device 402, and the second electronic device 402 may serve as a resource receiving end to receive a resource from the first electronic device 401. In some other embodiments, the second electronic device 402 may serve as a resource sending end to send a resource to the first electronic device 401, and the first electronic device 401 may serve as a resource receiving end to receive a resource from the second electronic device 402. In other words, each of the first electronic device 401 and the second electronic device 402 may serve as both a resource sending end and a resource receiving end.

For example, the first electronic device 401 or the second electronic device 402 may include but is not limited to various electronic devices, for example, a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, a smart city device, and/or the like. Optionally, the first electronic device 401 and the second electronic device 402 may be stationary devices, or may be portable devices. The first electronic device 401 and the second electronic device 402 may be electronic devices of a same type, or may be electronic devices of different types.

Optionally, an operating system installed in the first electronic device 401 or the second electronic device 402 may include but is not limited to iOS^{®}, Android^{®}, HarmonyOS^{®}, Windows^{®}, Linux^{®}, or another operating system.

Optionally, a connection may be established between the first electronic device 401 and the second electronic device 402 by using a wireless communication technology. For example, the wireless communication technology may include but is not limited to Bluetooth (Bluetooth, BT) (for example, conventional Bluetooth or Bluetooth low energy (Bluetooth low energy, BLE) Bluetooth), SparkLink (for example, conventional SparkLink or SparkLink low energy (SparkLink low energy, SLE)), a wireless local area network (wireless local area network, WLAN) (for example, a wireless fidelity (wireless fidelity, Wi-Fi) network), and the like.

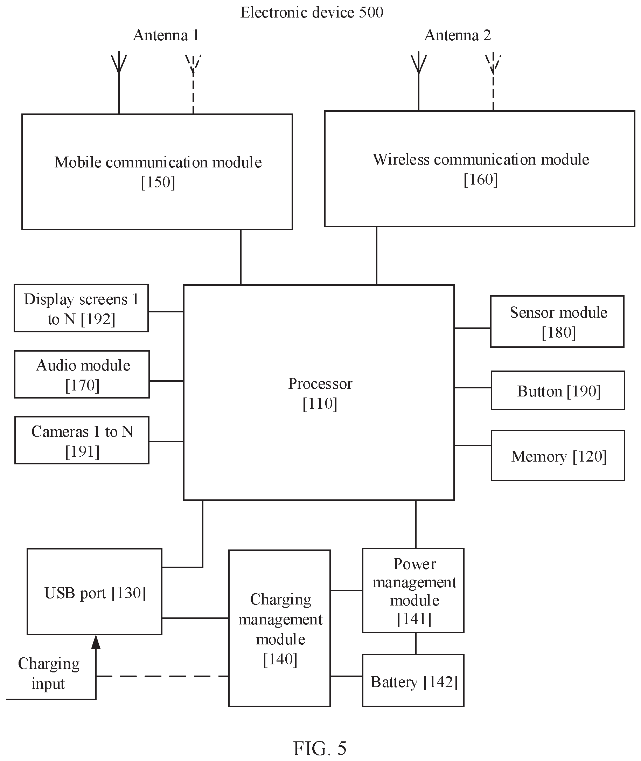

For example, FIG. 5 is a diagram of a structure of an electronic device according to an embodiment of this application. The electronic device may be the foregoing first electronic device 401, or may be the foregoing second electronic device 402. As shown in FIG. 5, the electronic device 500 may include a processor 110, a memory 120, a universal serial bus (universal serial bus, USB) port 130, a charging management module 140, a power management module 141, a battery 142, an antenna 1, an antenna 2, a mobile communication module 150, a wireless communication module 160, an audio module 170, a sensor module 180, a button 190, a camera 191, a display screen 192, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces, for example, the USB port 130.

The charging management module 140 is configured to receive a charging input from a charger. When charging the battery 142, the charging management module 140 may further supply power to the electronic device through the power management module 141.

The power management module 141 is configured to be connected to the battery 142, the charging management module 140, and the processor 110. The power management module 141 receives an input from the battery 142 and/or the charging management module 140, and supplies power to the processor 110, the memory 120, the display screen 192, the wireless communication module 160, and the like.

A wireless communication function of the electronic device 500 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 500 may be configured to cover one or more communication bands. Different antennas may be further reused to improve antenna utilization.

The mobile communication module 150 may provide a wireless communication solution that includes 2G/3G/4G/5G or the like and that is applied to the electronic device 500.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), SparkLink, a global navigation satellite system (global navigation satellite system, GNSS), frequency modulation (frequency modulation, FM), near field communication (near field communication, NFC), infrared (infrared, IR), or the like and that is applied to the electronic device 500.

In some embodiments, in the electronic device 500, the antenna 1 and the mobile communication module 150 are coupled, and the antenna 2 and the wireless communication module 160 are coupled, so that the electronic device 500 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, SparkLink, a GNSS, a WLAN, NFC, FM, an IR technology, and/or the like.

In some embodiments of this application, an example in which the electronic device 500 is the first electronic device 401 is used. When the first electronic device 401 is a resource sending end, the wireless communication module 160 may be used by the electronic device 500 to send a resource to the second electronic device 402. When the first electronic device 401 is a resource receiving end, the wireless communication module 160 may be used by the electronic device 500 to receive a resource shared by the second electronic device 402. Similarly, an example in which the electronic device 500 is the second electronic device 402 is used. When the second electronic device 402 is a resource sending end, the wireless communication module 160 may be used by the electronic device 500 to send a resource to the first electronic device 401. When the second electronic device 402 is a resource receiving end, the wireless communication module 160 may be used by the electronic device 500 to receive a resource shared by the first electronic device 401.

The electronic device 500 implements a display function through the GPU, the display screen 192, the application processor, and the like. The GPU is a microprocessor for image processing, and is connected to the display screen 192 and the application processor. The GPU is configured to: perform mathematical and geometric computation, and render an image. The processor 110 may include one or more GPUs that execute program instructions to generate or change display information.

The display screen 192 is configured to display an image, a video, and the like. The display screen 192 includes a display panel. In some embodiments, the electronic device 500 may include one or N display screens 192, where N is a positive integer greater than 1. In some embodiments of this application, the display screen 192 may be configured to present at least one of: a to-be-shared resource, various animation effects during cross-device resource sharing, and the like. For descriptions of various animation effects presented during cross-device resource sharing, refer to the following descriptions.

The electronic device 500 may implement a photographing function through the ISP, the camera 191, the video codec, the GPU, the display screen 192, the application processor, and the like.

The camera 191 is configured to capture a static image or a video. In some embodiments, the electronic device 500 may include one or N cameras 191, where N is a positive integer greater than 1. In some embodiments of this application, the camera 191 may be configured to capture a surrounding image of the electronic device 500. The image may not include a specific gesture used to trigger cross-device resource sharing, or may include a specific gesture used to trigger cross-device resource sharing. When the image includes a specific gesture used to trigger cross-device resource sharing, the gesture may be a resource sending gesture described below, or may be a resource receiving gesture described below. The camera 191 may recognize content in the image, to detect whether there is a specific gesture used to trigger cross-device resource sharing, for example, the resource sending gesture, the resource receiving gesture, or the like described below. In some implementations, the camera 191 may run in background in real time, to capture a surrounding image of the electronic device 500 in real time, so as to detect whether there is a specific gesture for triggering cross-device resource sharing, so that the electronic device 500 can send a resource to another electronic device in a timely manner, and respond to a resource sharing requirement of a user in a timely manner. For descriptions of the broadcast message herein, refer to the following related descriptions.

In this embodiment of this application, an electronic device may serve as both a resource sending end and a resource receiving end. Therefore, the electronic device may perform an operation that needs to be performed when the electronic device serves as a resource sending end, and may further perform an operation that needs to be performed when the electronic device serves as a resource receiving end, for example, including but not limited to the foregoing operation of turning on a camera in real time to recognize a specific gesture, and the like.

In some embodiments, to reduce power consumption overheads of recognizing the specific gesture in real time based on the camera by the electronic device, a low-power-consumption camera may be used. In a system architecture, a gesture recognition functional module is moved downward to a bottom layer of an operating system, or moved downward to hardware (for example, SensorHub). Only when the specific gesture is recognized, a recognition result is reported, and a functional module at an upper layer of the operating system is woken up to perform cross-device resource sharing. Therefore, only a bottom-layer module or a hardware module of the operating system with low power consumption needs to maintain a real-time running state to trigger a corresponding cross-device resource sharing function when the specific gesture is detected.

The memory 120 may be configured to store computer-executable program code. The executable program code includes instructions. The memory 120 may include a program storage area and a data storage area. The program storage area may store an operating system, an application required by at least one function, and the like. The data storage area may store data created during use of the electronic device 500, and the like. In addition, the memory 120 may include a high-speed random access memory, and may further include a non-volatile memory, for example, at least one magnetic disk storage device, a flash memory, a universal flash storage (universal flash storage, UFS), and the like. The processor 110 runs the instructions stored in the memory 120 and/or the instructions stored in the memory disposed in the processor, to perform various functional applications and data processing of the electronic device 500.

The electronic device 500 may implement an audio function, for example, music playing and recording, through the audio module 170, the application processor, and the like.

The sensor module 180 may include one or more sensors.

The button 190 includes a power button, a volume button, and the like. The button 190 may be a mechanical button, or may be a touch button. The electronic device 500 may receive a button input, and generate a button signal input related to user settings and function control of the electronic device 500.

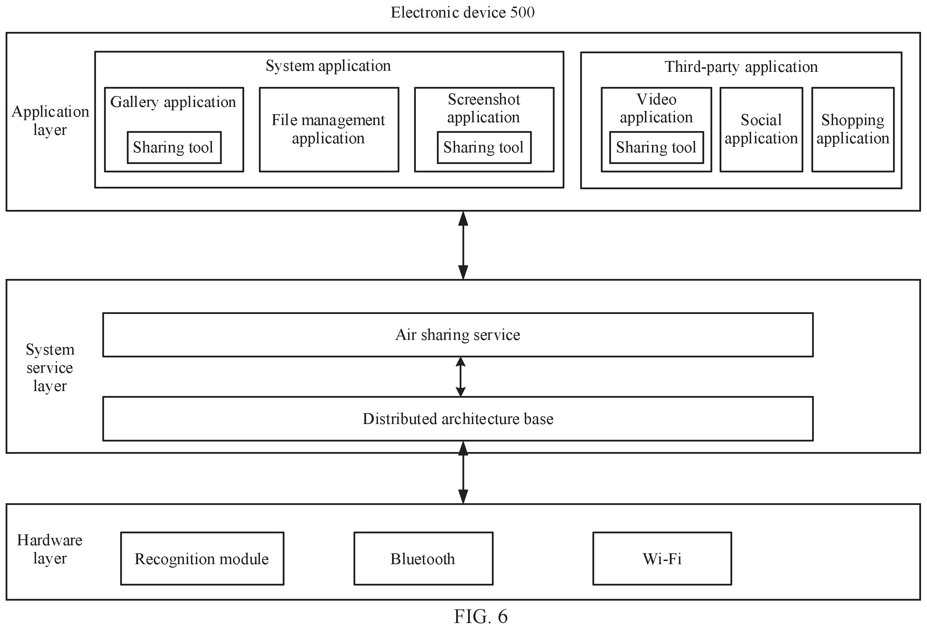

In some embodiments, a system architecture of the electronic device 500 shown in FIG. 5 may alternatively use a layered architecture, an event-driven architecture, a microkernel architecture, a microservice architecture, a cloud architecture, or the like. The layered architecture is used as an example. FIG. 6 is a diagram of a structure of another electronic device 500 according to an embodiment of this application. In the layered architecture, several layers may be obtained through division. Each layer has a clear role and task, and layers communicate with each other through an interface. As shown in FIG. 6, the electronic device 500 may include an application layer, a system service layer, and a hardware layer.

The application layer may include a series of application packages, for example, a system application, a third-party application, and the like. For example, the system application may include but is not limited to a gallery application, a file management application, a screenshot application, and the like, and the third-party application may include but is not limited to a video application, a social application, a shopping application, and the like. It may be understood that the application included at the application layer may be a program that has a visual icon and that is presented on a display screen of the electronic device, for example, the gallery application, or may be a program or a function that runs inside the electronic device and that is invisible to a user, for example, the screenshot application.

In some embodiments of this application, a sharing tool (ShareKit) may be separately integrated into one or more applications located at the application layer. For example, ShareKit is integrated into the gallery application, the screenshot application, the video application, and the like. Alternatively, ShareKit may not be integrated into one or more applications located at the application layer. For example, ShareKit is not integrated into the file manager application, the social application, the shopping application, and the like. It may be understood that the application into which ShareKit is integrated and the application into which ShareKit is not integrated shown in FIG. 6 are merely examples for description. ShareKit is a library file, and may provide an application with a sharing application programming interface (application programming interface, API). The sharing API may be used by the application to implement cross-device resource sharing.

When ShareKit is integrated into an application, the application may register, by accessing the sharing API provided by integrated ShareKit, with an air sharing service provided at the system service layer, to implement a cross-device resource sharing solution described in the following embodiments.

When ShareKit is not integrated into an application, in some implementations, because the application cannot register with the air sharing service provided at the system service layer, the application cannot implement the cross-device resource sharing solution described in the following embodiments. In some other implementations, another application into which ShareKit is integrated may assist in implementing the cross-device resource sharing solution described in the following embodiments. For example, the application into which ShareKit is integrated is the screenshot application. The screenshot application may register, by accessing the sharing API provided by integrated ShareKit, with the air sharing service provided at the system service layer, and share a resource in another application with another electronic device by using the air sharing service and a screenshot.

The system service layer may include a series of system services, for example, the air sharing service, a distributed architecture base, and the like. The air sharing service is used to provide an application, registering with the air sharing service, in the electronic device with a function of sharing a resource in the application with another electronic device. The air sharing service may support one or more of the following functions. For example, the air sharing service may support obtaining and management of a registration event of an application at the application layer, and execution of related processing of cross-device resource sharing based on the registration event of the application. It may be understood that when an application registers with the air sharing service, there is a registration event of the application. On the contrary, when an application does not register with the air sharing service, there is no registration event of the application.

The air sharing service may further support interconnection with the distributed architecture base, perform an operation such as discovery of an electronic device, and store a packet (including but not limited to a Bluetooth broadcast message and the like described below) for communication between electronic devices, to quickly send a data frame to another electronic device. For example, Wi-Fi communication is used between electronic devices, and the data frame may be an action frame. The action frame may be used to implement a point-to-point connection between electronic devices. The air sharing service may further support parsing of a sharing service identifier carried in a packet (including but not limited to a broadcast message, an action frame, and the like) for communication between electronic devices. The sharing service identifier may indicate that the packet is a packet used to implement cross-device resource sharing, to implement a quick connection between the electronic devices.

The air sharing service may further have a scheduling connection capability, for example, support interconnection with a recognition module at the hardware layer, to play various animation effects in a cross-device resource sharing process, and supports notification to the recognition module at the hardware layer after a broadcast message (which may also be referred to as a broadcast packet, a broadcast frame, or the like) from a resource sending end is received, to increase a frequency or a frame rate of recognizing a specific gesture used to trigger cross-device resource sharing.

The air sharing service may further have a development and feedback exchange (development and feedback exchange, DFX) capability and a performance optimization capability. The DFX capability may provide a series of tools and functions for developing, testing, and maintaining applications.

The distributed architecture base may provide a communication capability for interconnection and interworking between electronic devices, and can quickly discover and be connected to another electronic device, to implement connection adaptation between different electronic devices.

The hardware layer may include the recognition module, Bluetooth, and Wi-Fi. The recognition module may be configured to recognize a specific gesture used to trigger cross-device resource sharing. In some embodiments, the recognition module may be specifically implemented as a camera. The camera may periodically capture a surrounding image of the electronic device 500, to detect whether there is a specific gesture for triggering cross-device resource sharing. Optionally, in some implementations, the recognition module may alternatively recognize, when detecting that the electronic device 500 turns on a function switch of cross-device resource sharing, the specific gesture for triggering cross-device resource sharing.

It may be understood that the structure of the electronic device 500 shown in FIG. 6 is merely an example for description. In actual application, the electronic device 500 may further include more or fewer modules, and the modules may belong to different layers. The layers may be obtained in another manner. This is not limited in this application.

It may be further understood that the structures shown in FIG. 5, FIG. 6, and the like do not constitute a specific limitation on the first electronic device 401 or the second electronic device 402. In some other embodiments of this application, the first electronic device 401 or the second electronic device 402 may include more or fewer parts than those shown in the figure, some parts may be combined, some parts may be split, or different part arrangements may be used. The processing steps or functional features of the parts shown in the figure may be implemented by hardware, software, or a combination of software and hardware.

All technical solutions in the following embodiments may be implemented in a device with the structure shown in FIG. 5 or FIG. 6 and in a system with the architecture shown in FIG. 4. The following provides descriptions by using the first electronic device 401 as a first electronic device and the second electronic device 402 as a second electronic device, and an example in which the first electronic device serves a resource sending end and the second electronic device serves as a resource receiving end is used to describe the technical solutions in embodiments of this application.

Embodiments of this application provide a cross-device resource sharing method. After recognizing a gesture (referred to as a resource sending gesture below) used to trigger resource sending, a first electronic device may send an indication message to at least one electronic device, to indicate that the first electronic device is about to send a resource in the first electronic device. Correspondingly, the at least one electronic device may receive the indication message from the first electronic device. Then, after recognizing a gesture (referred to as a resource receiving gesture below) used to trigger resource receiving, a second electronic device in the at least one electronic device triggers a connection to the first electronic device. Based on the connection, the first electronic device may send the resource in the first electronic device to the second electronic device. Correspondingly, the second electronic device may receive the resource from the first electronic device, thereby implementing cross-device resource sharing.

Optionally, in embodiments of this application, the resource sending gesture and the resource receiving gesture may be gestures performed without coming into contact with a display screen of the electronic device, that is, air gestures. In this way, a user can implement cross-device resource sharing without performing an operation of touching the screen of the electronic device. Even in a scenario in which the screen of the electronic device cannot be touched, for example, fingers of the user are wet, cross-device resource sharing can be implemented. This can improve convenience and intelligence of cross-device resource sharing.

The following describes, with reference to different cross-device resource sharing scenarios, the cross-device resource sharing method provided in embodiments of this application. In the following scenarios, a resource shared by the first electronic device with the second electronic device is a resource presented on a display screen of the first electronic device. The resource presented on the display screen of the first electronic device may be a resource in any application installed in the first electronic device. Certainly, in another scenario, the resource shared by the first electronic device with the second electronic device may alternatively be a resource that is not presented on the display screen of the first electronic device.

In some scenarios, the resource sent by the first electronic device to the second electronic device may be a resource in an application registering with the air sharing service shown in FIG. 6, that is, a resource in an application that can implement cross-device resource sharing by using the air sharing service. An example in which the application registering with the air sharing service is a gallery application, the resource sent by the first electronic device to the second electronic device is a picture in the gallery application, the first electronic device is an electronic device 10, and the second electronic device is an electronic device 20 is used to describe a process in which the first electronic device shares a picture with the second electronic device.

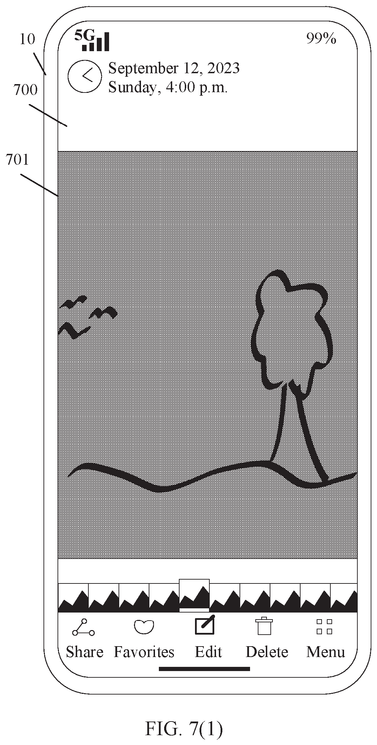

For example, as shown in FIG. 7(1), the electronic device 10 may present an interface 700 of the gallery application (which may be used as an example of a first interface of a first application). The interface 700 is an interface for displaying a picture in a large-picture manner. A picture 701 (which may be used as an example of first content) is displayed in the interface 700. In some embodiments, when presenting any interface on the electronic device 10, the gallery application may use the air sharing service to share a resource in the current interface. In other words, when presenting any interface of the gallery application, the electronic device 10 may perform an operation of sending a resource included in the interface to another electronic device. In some other embodiments, only when presenting a specific interface on the electronic device 10, for example, including but not limited to the interface 700 shown in FIG. 7(1), the gallery application can use the air sharing service to share a resource in the current interface. In other words, only when presenting a specific interface of the gallery application, the electronic device 10 may perform an operation of sending a resource included in the interface to another electronic device. Optionally, a specific interface for which the air sharing service can be used during presentation by the gallery application may be preset by the gallery application. For an implementation of another application, refer to a similar implementation of the gallery application herein.

Then, when the electronic device 10 presents the interface 700 shown in FIG. 7(1), a user may trigger, by performing a resource sending gesture, the electronic device 10 to send the picture 701 to the electronic device 20. For example, the electronic device 10 detects that the user performs various resource sending gestures such as a palm-to-fist air grab gesture, and in response to the operation performed by the user, starts to perform an operation of sending the picture 701 to another electronic device.

In some embodiments, the electronic device 10 may periodically perform gesture recognition in background through the recognition module shown in FIG. 6. For example, the recognition module is a camera. The electronic device 10 may periodically capture a surrounding image of the electronic device 10 through the camera, to recognize, based on the captured image, whether there is a specific gesture used to trigger cross-device resource sharing. In this way, the specific gesture used to trigger cross-device resource sharing can be quickly recognized.

In some embodiments, because it takes a specific time to perform a cross-device resource sharing process, to avoid a case in which after performing the resource sending gesture, the user mistakenly considers that the electronic device 10 does not respond, the electronic device 10 may present some animation effects of cross-device resource sharing when detecting the resource sending gesture, to bring more intelligent perception experience of cross-device resource sharing to the user.

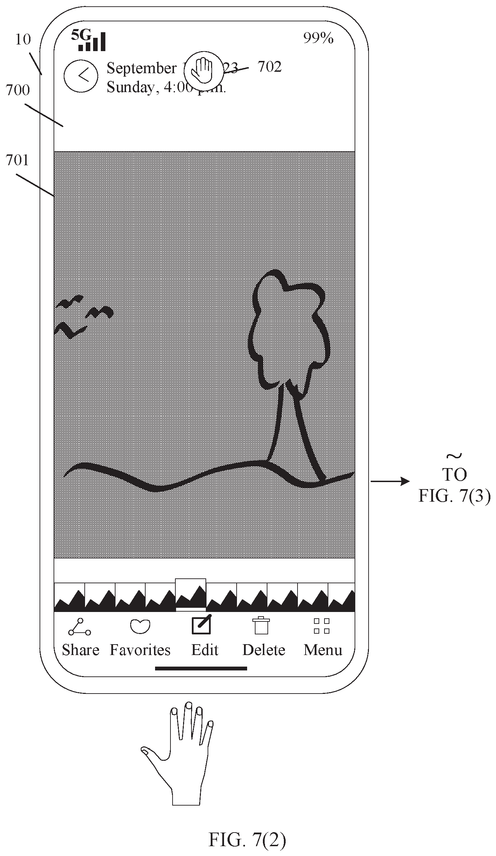

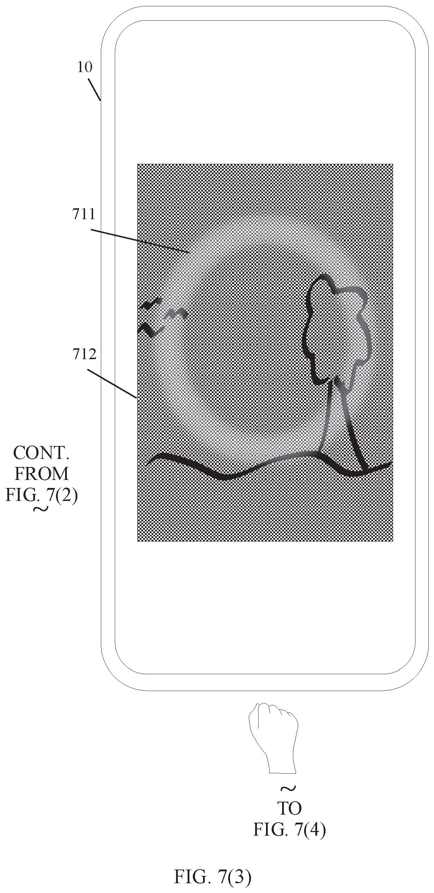

For example, as shown in FIG. 7(2), when the electronic device 10 detects a palm (which may be used as an example of a start gesture included in the resource sending gesture, where the start gesture indicates a start of execution of the resource sending gesture) in the air grab gesture, the electronic device 10 may present a palm icon 702 (that is, present a gesture icon corresponding to the start gesture included in the resource sending gesture) in the interface 700, so that the user determines, based on the presented palm icon 702, that the electronic device 10 recognizes the resource sending gesture. Then, when the electronic device 10 continues to detect a fist in the air grab gesture, the electronic device 10 may present a to-be-sent animation effect (which may be used as an example of a first to-be-sent animation effect) shown in FIG. 7(3). Optionally, the to-be-sent animation effect may include a light shadow 711 and a card 712 obtained based on the picture 701. For example, the light shadow 711 may be a circular ring having a light shadow display effect, and the card 712 includes the picture 701 of a reduced size.

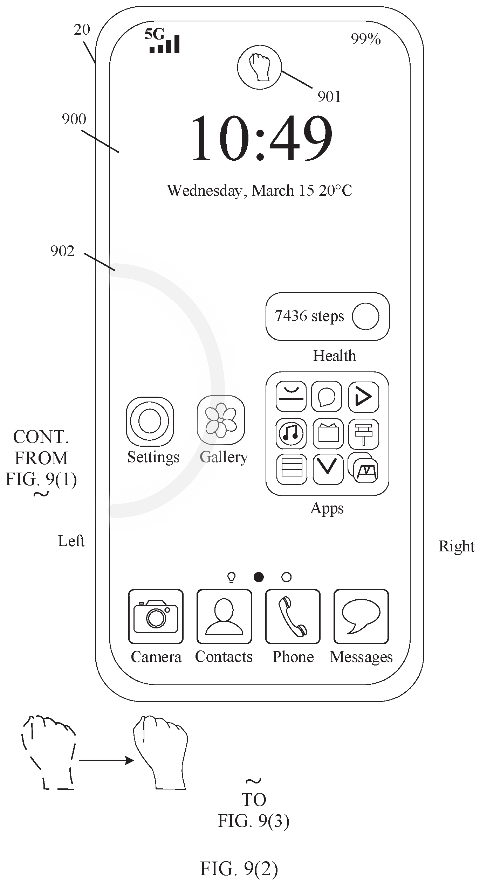

In some implementations, when detecting the fist in the air grab gesture, the electronic device 10 may further present a fist icon in the interface 700, another interface of the gallery application, or an interface of another application. The fist icon may be displayed at a same position as the palm icon 702 and has a same UI style as the palm icon 702 (for example, may be shown by a fist icon 901 shown in FIG. 9(2)), so that the user determines, based on the presented fist icon, that the electronic device 10 recognizes the resource sending gesture. For example, when detecting the palm in the air grab gesture, the electronic device 10 may present the palm icon 702. If the electronic device 10 detects the fist in the air grab gesture in a next period of time, a change may be made to present the fist icon. The fist icon, the light shadow 711, and the card 712 may be simultaneously displayed in a same interface of the gallery application, or may be sequentially displayed in different interfaces of the gallery application or interfaces of different applications.

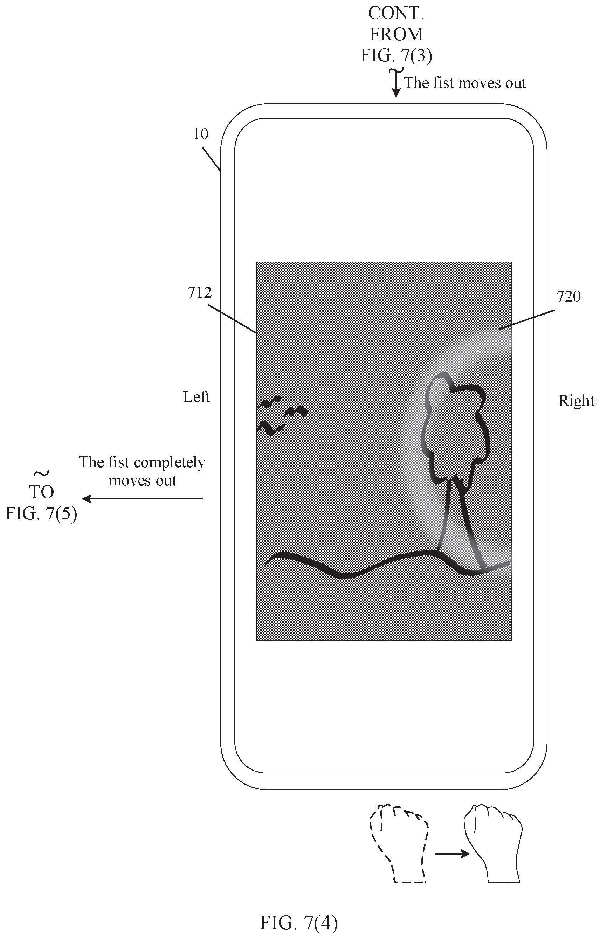

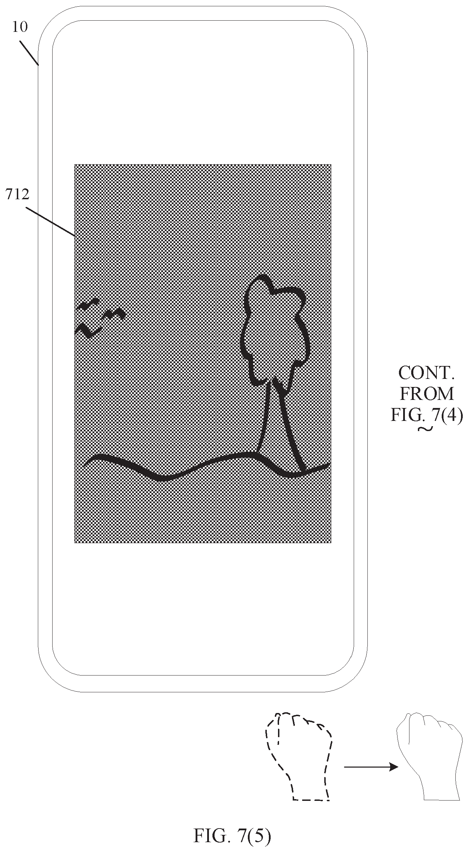

Optionally, when the electronic device 10 detects that the fist (which may be used as an example of an end gesture included in the resource sending gesture, where the end gesture indicates an end of execution of the resource sending gesture) in the air grab gesture moves out from a front of the electronic device 10, the electronic device 10 may further present a gesture movement animation effect shown in FIG. 7(4). Optionally, the gesture movement animation effect may include a light shadow 720, the card 712 obtained based on the picture 701, and the like. A difference between the to-be-sent animation effect shown in FIG. 7(3) and the gesture movement animation effect shown in FIG. 7(4) lies in that the light shadows are displayed at different positions on the electronic device 10. Optionally, the light shadow in the to-be-sent animation effect may move in a direction in which the fist in the air grab gesture moves out from the front of the electronic device 10, to generate the gesture movement animation effect. In FIG. 7(4), an example in which the fist in the air grab gesture moves out from a right side of a screen of the electronic device 10 is used. Optionally, when the fist in the air grab gesture completely moves out from the front of the electronic device 10, that is, the electronic device 10 cannot detect the fist in the air grab gesture, the light shadow in the to-be-sent animation effect may completely move out from the display screen of the electronic device 10. For example, the electronic device 10 may present a gesture movement animation effect shown in FIG. 7(5), and the light shadow 720 may no longer be presented in the gesture movement animation effect. Positions at which the light shadows 711 and 720 are displayed on the display screen of the electronic device 10 may change in real time with a real-time change of a position of the fist in the air grab gesture in front of the electronic device 10. Therefore, the electronic device 10 may provide the user with experience that the light shadows 711 and 720 are controlled in air by the fist of the user, thereby improving a sense of science and technology of human-computer interaction, and improving user experience when the user uses the electronic device to perform cross-device resource sharing.

In some embodiments, in a process of presenting the interfaces shown in FIG. 7(2) to FIG. 7(4), the electronic device 10 may perform an operation of sending a picture to another electronic device. Specifically, when recognizing the palm-to-fist air grab gesture (that is, detecting the start gesture and the end gesture), the electronic device 10 may send an indication message to at least one other electronic device, to indicate that the electronic device 10 is about to send a resource in the electronic device 10. Correspondingly, the at least one other electronic device may receive the indication message from the electronic device 10. Then, the electronic device 20 in the at least one other electronic device performs an operation of recognizing a resource receiving gesture, to determine whether to receive the resource from the electronic device 10. For example, when the electronic device 20 detects that the user performs various resource receiving gestures such as a fist-to-palm air release gesture, in response to the operation performed by the user, the electronic device 20 starts to perform an operation of receiving the picture from the electronic device 10.

It may be understood that in this embodiment of this application, an example in which the resource sending gesture is a palm-to-fist air grab gesture, and the resource receiving gesture is a fist-to-palm air release gesture is used. In another embodiment, the resource sending gesture and the resource receiving gesture may alternatively be other air gestures. For example, the resource sending gesture may be a gesture of waving the palm to the right side of the screen in air, and the resource receiving gesture may be a gesture of waving the fist to a left side of the screen in air, or the like. This is not limited in this embodiment of this application.

Similarly, in some embodiments, to help recognize, in a timely manner, that the user performs a specific gesture used to trigger cross-device resource sharing, the electronic device 20 may also periodically perform gesture recognition in background through the recognition module shown in FIG. 6. For example, the recognition module is a camera. The electronic device 20 may periodically capture a surrounding image of the electronic device 20 through the camera, to recognize, based on the captured image, whether there is a specific gesture used to trigger cross-device resource sharing. In this way, the specific gesture used to trigger cross-device resource sharing can be quickly recognized.

In this embodiment, in some implementations, to help the electronic device 20 more quickly recognize the resource receiving gesture to complete resource sharing with the electronic device 10 as soon as possible, after receiving the indication message from the electronic device 10, the electronic device 20 may increase a frequency at which the recognition module recognizes the resource receiving gesture. That is, a recognition frequency (which may be described as a first frequency) used by the recognition module in the electronic device 20 before the indication message from the electronic device 10 is received is less than a recognition frequency (which may be described as a second frequency) used after the indication message from the electronic device 10 is received. For example, the recognition module is a camera. A frequency at which the camera in the electronic device 20 captures a surrounding image before the electronic device 20 receives the indication message from the electronic device 10 may be less than a frequency at which a surrounding image is captured after the indication message from the electronic device 10 is received. In other words, a frame rate of the surrounding image captured by the camera in the electronic device 20 before the indication message from the electronic device 10 is received may be less than a frame rate of the surrounding image captured after the indication message from the electronic device 10 is received. In this way, the resource receiving gesture can be more quickly and accurately recognized, thereby improving efficiency of cross-device resource sharing, and improving intelligence of cross-device resource sharing.

In some embodiments, an electronic device may serve as both a resource sending end and a resource receiving end. Therefore, if the electronic device 20 may serve as both a resource sending end and a resource receiving end, to help the electronic device 20 recognize both the resource sending gesture and the resource receiving gesture in a timely manner, the recognition module in the electronic device 20 may always perform a gesture recognition operation in background. In other words, before receiving the indication message from the electronic device 10, the electronic device 20 performs gesture recognition through the recognition module, to recognize the resource sending gesture and the resource receiving gesture in a timely manner.

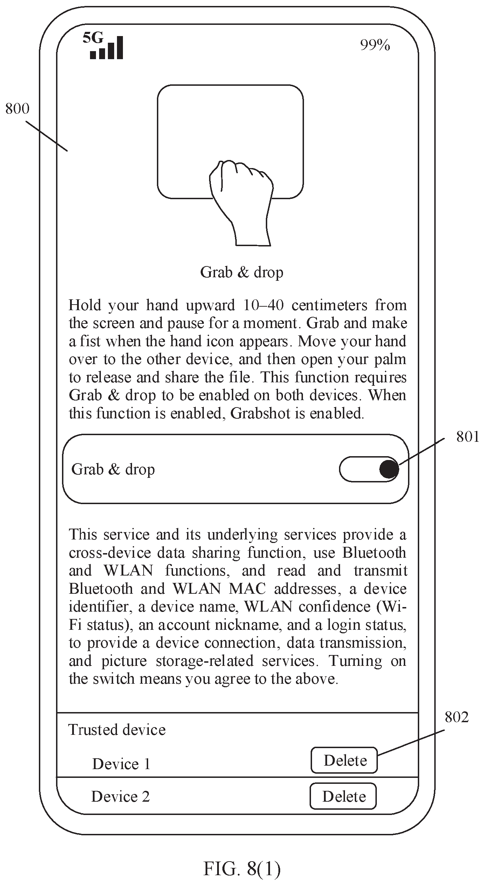

In some embodiments, after an electronic device (for example, the electronic device 10, the electronic device 20, or the like) enables a cross-device resource sharing function, in response to enabling of the cross-device resource sharing function, the electronic device may perform a gesture recognition operation in real time in background through the recognition module, to recognize the resource sending gesture and/or the resource receiving gesture in a timely manner. In a possible implementation, the cross-device resource sharing function may be enabled by default after the electronic device is delivered from a factory. In another possible implementation, the cross-device resource sharing function may be manually enabled. For example, the user may enable the cross-device resource sharing function of the electronic device by performing various button operations, gesture operations, voice operations, or the like. For example, the user enables the cross-device resource sharing function by using a settings application installed in the electronic device. As shown in FIG. 8(1), the electronic device may present an interface 800 of the settings application. A Grab & drop button 801 is displayed in the interface 800. The user may enable or disable the cross-device resource sharing function of the electronic device by using the Grab & drop button 801.

Similarly, in some embodiments, to avoid a case in which after performing the resource receiving gesture, the user mistakenly considers that the electronic device 20 does not respond, the electronic device 20 may further present some animation effects of cross-device resource sharing when detecting the resource receiving gesture, to bring more intelligent perception experience of cross-device resource sharing to the user.

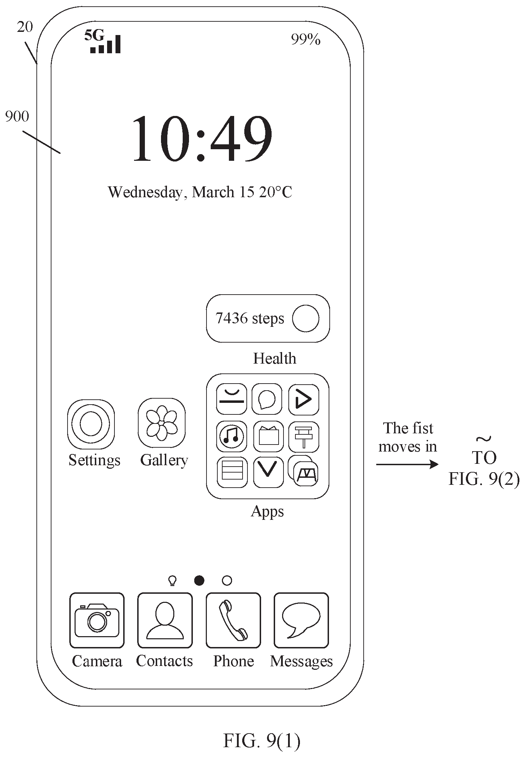

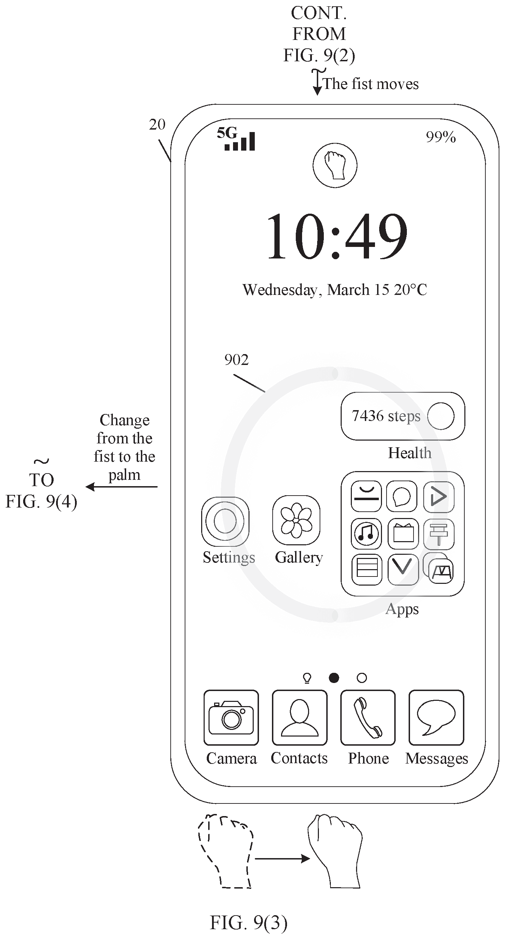

For example, as shown in FIG. 9(1), the electronic device 20 may display a home screen 900 (or referred to as a home 900). Then, when the electronic device 20 detects a fist (which may be used as an example of a start gesture included in the resource receiving gesture, where the start gesture may indicate a start of execution of the resource receiving gesture) in the air release gesture, as shown in FIG. 9(2), the electronic device 20 may present a fist icon 901 on the home screen 900, that is, present a gesture icon corresponding to the start gesture included in the resource receiving gesture, so that the user determines, based on the presented fist icon 901, that the electronic device 20 recognizes the resource receiving gesture. Optionally, when detecting that the fist in the air release gesture moves in from the front of the electronic device 20, the electronic device 20 may further present a gesture movement animation effect shown in FIG. 9(2). Optionally, in this example, the gesture movement animation effect may include a light shadow 902 shown in FIG. 9(2). For example, the light shadow 902 may be a circular ring having a light shadow display effect. It may be understood that an effect of the light shadow is not limited in this embodiment of this application. Optionally, the light shadow 902 shown in FIG. 9(2) may move in a direction in which the fist in the air release gesture moves in from the front of the electronic device 20, to generate the gesture movement animation effect shown in FIG. 9(2). In FIG. 9(2), an example in which the fist in the air release gesture moves in from a left side of a screen of the electronic device 20 is used. Optionally, when the fist in the air release gesture completely moves in from the front of the electronic device 20, that is, the electronic device 20 can detect the complete fist in the air release gesture, the light shadow 902 may be completely presented on the electronic device 20, as shown in a presentation effect shown in FIG. 9(3). A position at which the light shadow 902 is displayed on the display screen of the electronic device 20 may change in real time with a real-time change of a position of the fist in the air release gesture in front of the electronic device 20. Therefore, the electronic device 20 may provide the user with experience that the light shadow 902 is controlled in air by the fist of the user, thereby improving a sense of science and technology of human-computer interaction, and improving user experience when the user uses the electronic device to perform cross-device resource sharing.

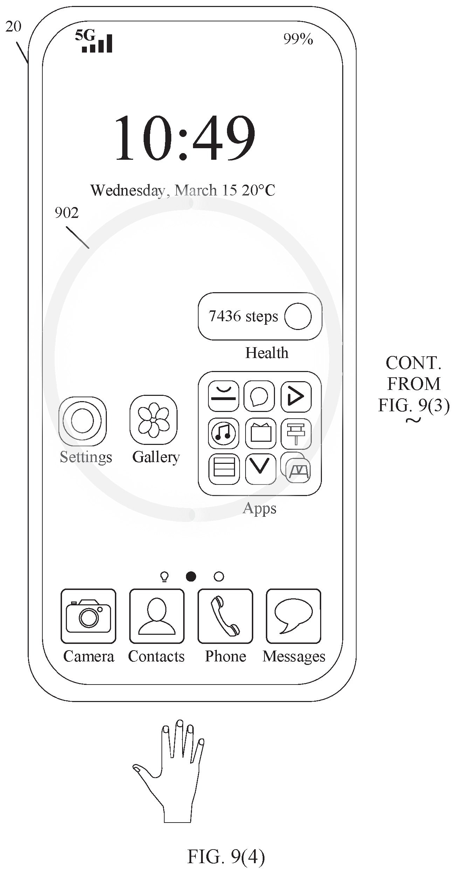

In some embodiments, when the electronic device 20 further detects a palm (which may be used as an example of an end gesture included in the resource receiving gesture, where the end gesture may indicate an end of execution of the resource receiving gesture) in the air release gesture, the electronic device 20 may further present a light shadow animation effect on the home screen 900. The light shadow animation effect may be a light shadow that gradually increases and then disappears. The light shadow 902 shown in FIG. 9(3) may gradually increase on the display screen until the light shadow disappears on the display screen. In FIG. 9(4), a diagram of an effect after the light shadow 902 increases is shown.

In some implementations, when detecting the palm in the air release gesture, the electronic device 20 may further present a palm icon on the home screen 900 or in an interface of another application. The palm icon may be presented at a same position as the fist icon 901 and has a same UI style as the fist icon 901 (for example, may be shown by the palm icon 702 shown in FIG. 7(2)), so that the user determines, based on the presented palm icon, that the electronic device 20 recognizes the resource receiving gesture. For example, when detecting the fist in the air release gesture, the electronic device 20 may present the fist icon 902. If the electronic device 20 detects the palm in the air release gesture in a next period of time, a change may be made to present the palm icon. The palm icon and the light shadow 902 may be simultaneously displayed in a same interface of a home screen application, or may be sequentially displayed in different interfaces (for example, a primary screen, a secondary screen, and the like) of a home screen application or interfaces of different applications.

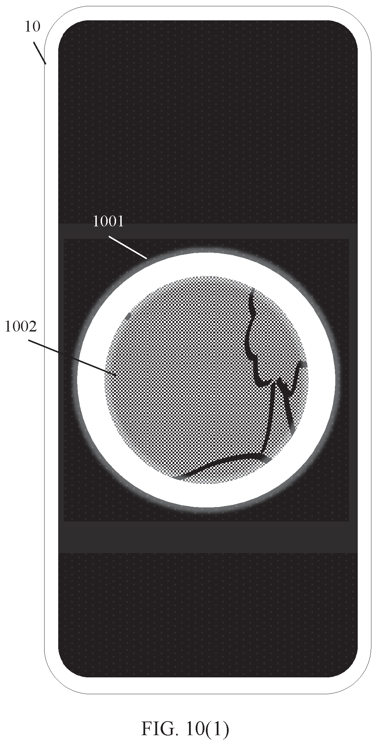

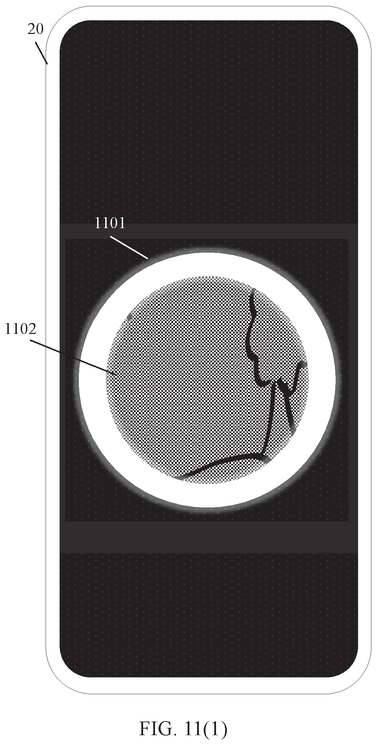

In some embodiments, in a process in which the electronic device 10 sends the picture 701 to the electronic device 20, the electronic device 10 may further present a sending animation effect and/or the electronic device 20 may further present a receiving animation effect. For example, the sending animation effect presented by the electronic device 10 may be shown in FIG. 10(1). The sending animation effect may include a preview image 1002 (which may be used as an example of preview data of the first content) and a light shadow 1001. The receiving animation effect presented by the electronic device 20 may be shown in FIG. 11(1). The receiving animation effect may include a preview image 1102 (which may be used as an example of preview data of the first content) and a light shadow 1101. The preview image 1002 and the preview image 1102 may be preview images of the picture 701. Optionally, the preview image 1102 may be sent by the electronic device 10 to the electronic device 20. The light shadow 1001 and the light shadow 1101 may be in a shape of a circular ring. The preview image 1002 and the preview image 1102 may be circular, or may be in shapes that respectively match shapes of the light shadow 1001 and the light shadow 1101. The preview image 1002 and the preview image 1102 may be respectively displayed in the light shadow 1001 and the light shadow 1101. The preview image 1002 and the preview image 1102 may be respectively obtained through cutting based on the picture 701 and the shapes of the light shadow 1001 and the light shadow 1101. It may be understood that in this example, the sending animation effect presented by the electronic device 10 is the same as the receiving animation effect presented by the electronic device 20. In another example, the sending animation effect presented by the electronic device 10 may be different from the receiving animation effect presented by the electronic device 20.

Optionally, in the sending animation effect shown in FIG. 10(1), a black area outside the light shadow 1001 may be transparent, and interface content (for example, an interface of Gallery) existing before the electronic device 10 displays the sending animation effect is displayed outside the light shadow 1001. Similarly, in the receiving animation effect shown in FIG. 11(1), a black area outside the light shadow 1101 may be transparent, and interface content (for example, a home screen) existing before the electronic device 20 displays the receiving animation effect is displayed outside the light shadow 1101.

Optionally, the interface content that is displayed outside the light shadow 1001 and that exists before the electronic device 10 displays the sending animation effect may be presented in a blurred form, and the interface content that is displayed outside the light shadow 1101 and that exists before the electronic device 20 displays the receiving animation effect may be presented in a blurred form. Compared with this, the preview image 1002 and the preview image 1102 are not blurred. In this way, a line of sight of the user may focus on the preview image 1002 and the preview image 1102, so that the user perceives that data transmission is being performed, to avoid a case in which the user performs another operation and the process is interrupted.

Optionally, the preview image 1002 and the preview image 1102 may be presented in a blurred form. However, the interface content that is displayed outside the light shadow 1001 and that exists before the electronic device 10 displays the sending animation effect and the interface content that is displayed outside the light shadow 1101 and that exists before the electronic device 20 displays the receiving animation effect are not blurred. Therefore, the preview image 1002 and the preview image 1102 in the blurred form may be used to enable the user to perceive that the corresponding picture 701 is being transmitted, and no impact is imposed on continued viewing of content of another part of a displayed interface of the electronic device 10 or the electronic device 20 by the user.

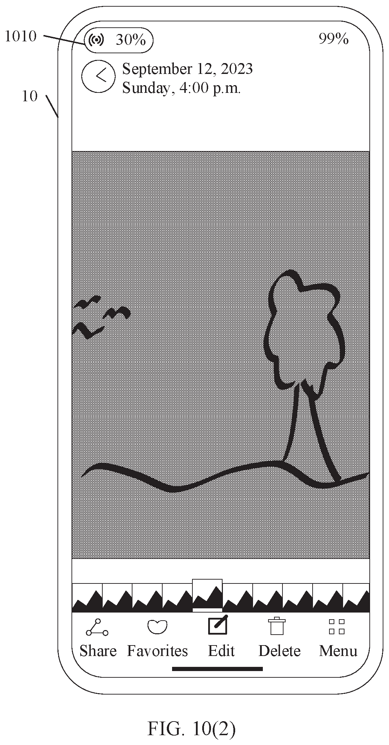

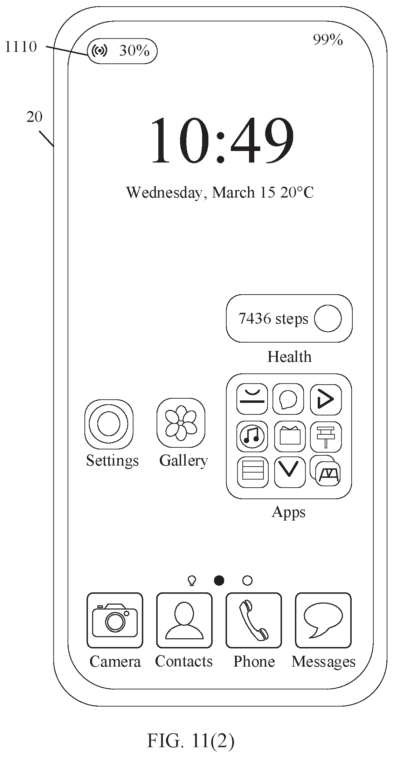

Optionally, in the process in which the electronic device 10 sends the picture to the electronic device 20, to help the user learn of resource sharing progress and help the user perform another operation on the electronic device 10, the electronic device 10 may further present sending progress by using a live capsule (which may be used as an example of a target control presented by the first electronic device). For example, the electronic device 10 may automatically jump from presenting the sending animation effect shown in FIG. 10(1) to presenting a live capsule 1010 shown in FIG. 10(2). Similarly, to help the user perform another operation on the electronic device 20, the electronic device 20 may further present receiving progress by using a live capsule. For example, the electronic device 20 may automatically jump from presenting the receiving animation effect shown in FIG. 11(1) to presenting a live capsule 1110 shown in FIG. 11(2). Certainly, the electronic device 10 and/or the electronic device 20 may not present the sending animation effect or the receiving animation effect, but directly present the live capsule.

Optionally, in another embodiment, the electronic device 10 and/or the electronic device 20 may alternatively respectively present the sending progress and the receiving progress by using another control (for example, a floating ball or the like).

Optionally, the sending animation effect including the light shadow 1001 and the preview image 1002 may alternatively change in real time with the real-time change of the position of the fist in the air grab gesture in front of the electronic device 10, as shown in FIG. 7(3) and FIG. 7(4); and the receiving animation effect including the light shadow 1101 and the preview image 1102 may alternatively change in real time with a real-time change of a position of the palm in the air release gesture in front of the electronic device 10, as shown in FIG. 9(2) and FIG. 9(3).

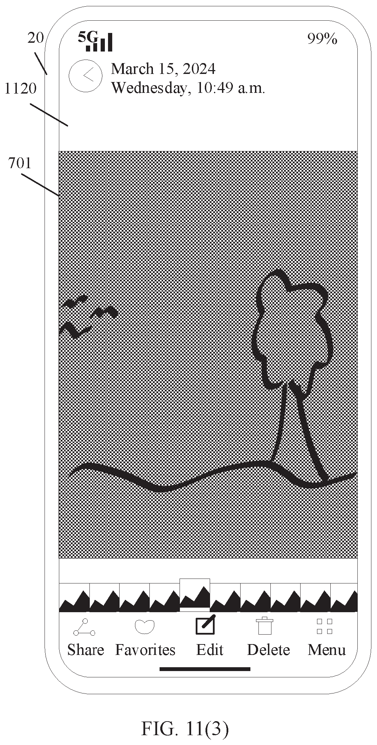

Optionally, after sharing of the picture 701 between the electronic device 10 and the electronic device 20 is completed, the electronic device 10 may return to the interface 700 shown in FIG. 7(1), that is, may return to an interface presented when the resource sending gesture is received. Optionally, the electronic device 20 may present the received picture 701. For example, the electronic device 20 stores the received picture in the gallery application. As shown in FIG. 11(3), the electronic device 20 may present an interface 1120 of the gallery application shown in FIG. 11(3), to present the received picture 701. Alternatively, the electronic device 20 may present the received picture in a form of a floating window, and the user is allowed to drag the floating window to a specified application. Alternatively, the electronic device 20 may pop up a query window to query the user whether to store the received picture in the electronic device 20, and the user may choose to store the received picture in a specified application or directory of the electronic device 20; and/or the user is queried about an application to be used to view the received picture, and the user may view the received picture by using the specified application.

In the example shown in FIG. 9(1), FIG. 9(2), FIG. 9(3), and FIG. 9(4), the electronic device 20 receives, when presenting the home screen, the picture shared by the electronic device 10. Optionally, when the electronic device 20 presents a different interface before receiving the picture shared by the electronic device 10, the electronic device 20 may perform different processing on the received picture from the electronic device 10, and may store the picture (this is used as an example in the scenario shown in FIG. 11(1), FIG. 11(2), and FIG. 11(3)), or may send the picture to another person. For example, if the electronic device 20 presents a chat interface with a friend before receiving the picture shared by the electronic device 10, the electronic device 20 may directly send the received picture to the chat interface, to send the received picture to the friend.

Based on the solution in the foregoing scenario, after the user performs the air grab gesture on the resource sending end, the resource sending end may send the indication message to an external device to indicate that the resource sending end is about to send a resource. In this way, after receiving the indication message and the air release gesture, the resource receiving end may receive the resource from the resource receiving end. The user does not need to perform an operation of touching the screen of the electronic device, and the electronic devices do not need to come into contact with each other, making cross-device resource sharing more convenient and intelligent.

In some other scenarios, the resource sent by the first electronic device to the second electronic device may be a resource in an application that does not register with the air sharing service shown in FIG. 6, that is, a resource in an application that cannot implement cross-device resource sharing by using the air sharing service. An example in which the application that does not register with the air sharing service is a home screen application, the first electronic device is an electronic device 10, and the second electronic device is an electronic device 20 is used to describe a process in which the first electronic device shares a resource with the second electronic device. It may be understood that herein, an example in which the application that does not register with the air sharing service shown in FIG. 6 is a home screen application is used. In actual application, the application that does not register with the air sharing service shown in FIG. 6 may alternatively be various system applications (for example, the file management application shown in FIG. 6), third-party applications (for example, a social application and a shopping application), or the like.

It may be understood that the solution in this scenario is also applicable to a scenario in which an application registering with the air sharing service presents an interface (for example, a second interface of a first application) in which the air sharing service is unavailable, but receives a resource sending gesture performed by a user.

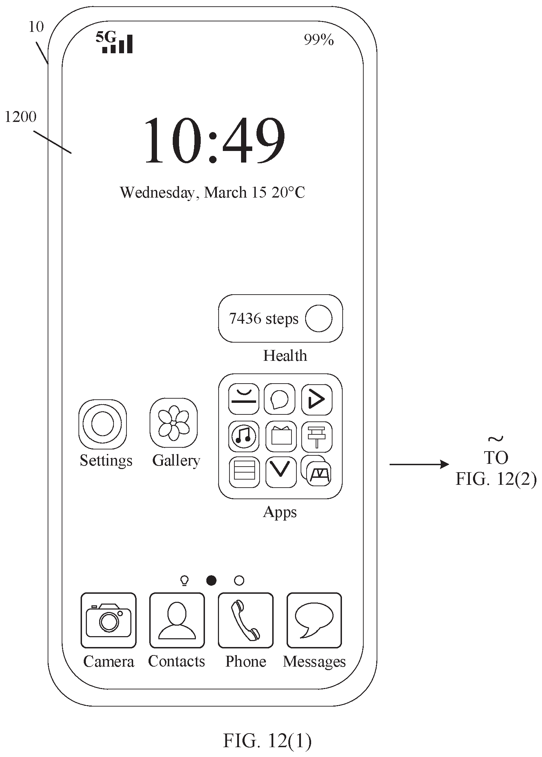

For example, as shown in FIG. 12(1), the electronic device 10 may present a home screen 1200 (which may be used as an example of an interface of a second application). Various UI elements such as an icon of one or more applications and a time control are displayed on the home screen 1200. Then, when the electronic device 10 presents the home screen 1200 shown in FIG. 12(1), the user may perform a resource sending gesture such as a palm-to-fist air grab gesture. In response to the operation performed by the user, the electronic device 10 may generate a screenshot of the home screen 1200. In addition, the electronic device 10 starts to perform an operation of sending the screenshot to another electronic device. Specifically, the electronic device 10 may send an indication message to at least one other electronic device, to indicate that the electronic device 10 is about to send a resource in the electronic device 10. Correspondingly, the at least one other electronic device may receive the indication message from the electronic device 10. Then, the electronic device 20 in the at least one other electronic device performs an operation of recognizing a resource receiving gesture, to determine whether to receive the resource from the electronic device 10. For example, when the electronic device 20 detects that the user performs various resource receiving gestures such as a fist-to-palm air release gesture, in response to the operation performed by the user, the electronic device 20 starts to perform an operation of receiving the screenshot from the electronic device 10.

In this scenario, for implementations of recognizing the resource sending gesture by the electronic device 10 and recognizing the resource receiving gesture by the electronic device 20, refer to the implementation in the foregoing scenario.

Similarly, in this scenario, when the electronic device 10 detects the resource sending gesture, and/or when the electronic device 20 detects the resource receiving gesture, an animation effect of cross-device resource sharing may be further presented, to bring more intelligent perception experience of cross-device resource sharing to the user.

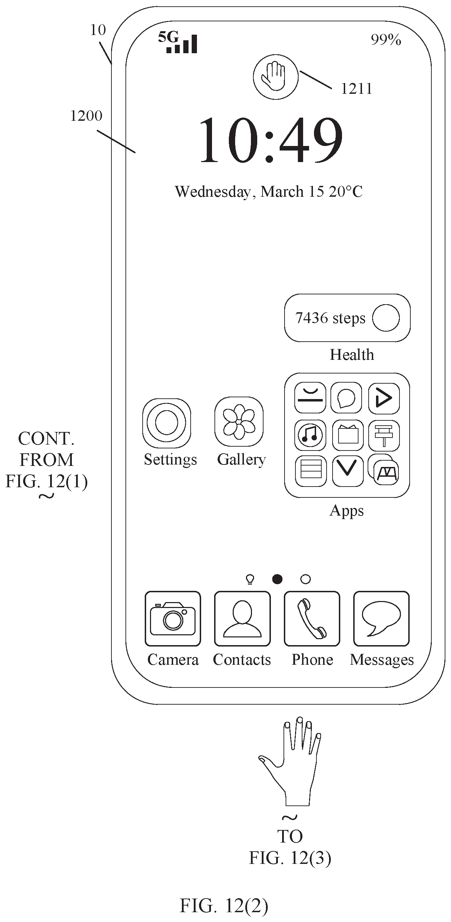

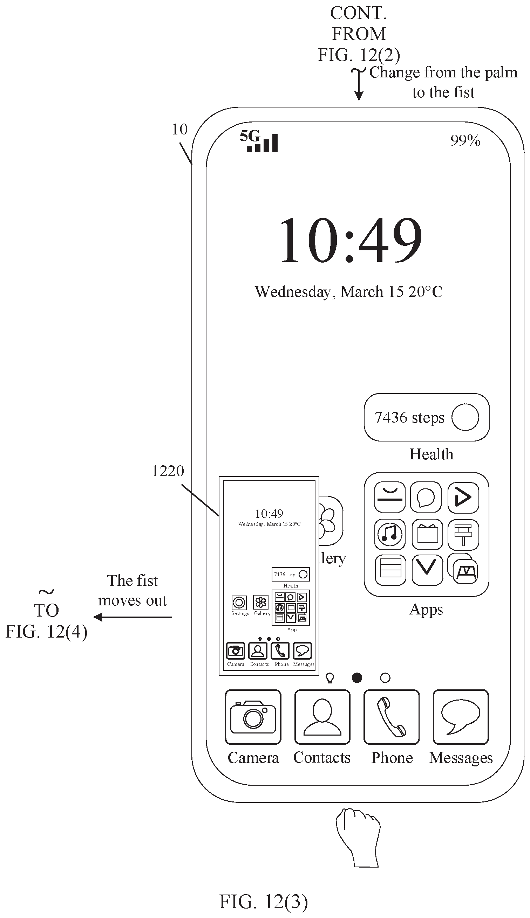

For example, as shown in FIG. 12(2), when the electronic device 10 detects a palm in the air grab gesture, the electronic device 10 may present a palm icon 1211 on the home screen 1200. When the electronic device 10 continues to detect a fist in the air grab gesture, the electronic device 10 may present a to-be-sent animation effect (which may be used as an example of a second to-be-sent animation effect) shown in FIG. 12(3). Optionally, the to-be-sent animation effect may be an animation effect of generating and presenting a screenshot 1220 of the home screen 1200. Optionally, a light shadow shown in FIG. 7(3) (not shown in FIG. 12(3)) may be further presented in the to-be-sent animation effect.

In some implementations, when detecting the fist in the air grab gesture, the electronic device 10 may further present a fist icon on the home screen 1200 or in another interface. The fist icon may be displayed at a same position as the palm icon 1211 and has a same UI style as the palm icon 1211 (for example, may be shown by a fist icon 901 shown in FIG. 9(2)), so that the user determines, based on the presented fist icon, that the electronic device 10 recognizes the resource sending gesture. For example, when detecting the palm in the air grab gesture, the electronic device 10 may present the palm icon 1211. If the electronic device 10 detects the fist in the air grab gesture in a next period of time, a change may be made to present the fist icon. The fist icon and the screenshot 1220 shown in FIG. 12(3) may be simultaneously displayed in a same interface of the home screen application, or may be sequentially displayed in different interfaces of the home screen application or interfaces of different applications.

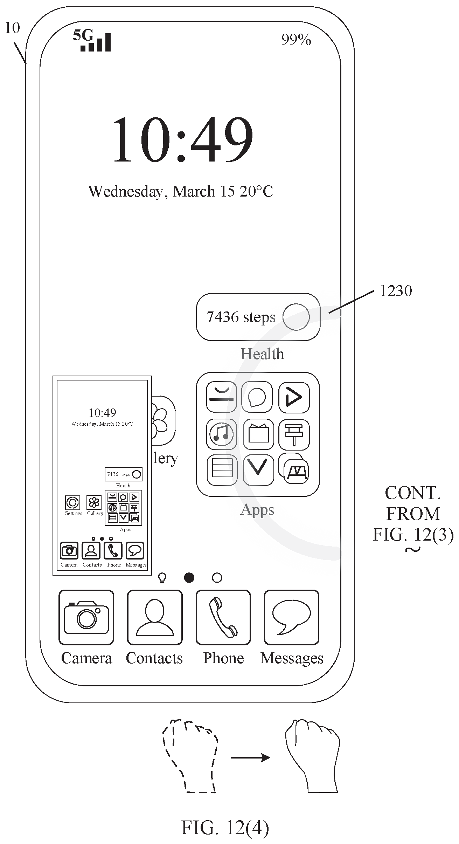

For another example, when the electronic device 10 detects that the fist in the air grab gesture moves out from a front of the electronic device 10, the electronic device 10 may further present a gesture movement animation effect shown in FIG. 12(4). Optionally, the gesture movement animation effect may include a light shadow 1230. In FIG. 12(4), an example in which the fist in the air grab gesture moves out from a right side of a screen of the electronic device 10 is used. For descriptions of the light shadow 1230, refer to the descriptions of the light shadow in the gesture movement animation effect shown in FIG. 7(4). A position at which the light shadow 1230 is displayed on the display screen of the electronic device 10 may change in real time with a real-time change of a position of the fist in the air grab gesture in front of the electronic device 10. Therefore, the electronic device 10 may provide the user with experience that the light shadow 1230 is controlled in air by the fist of the user, thereby improving a sense of science and technology of human-computer interaction, and improving user experience when the user uses the electronic device to perform cross-device resource sharing.

For another example, the electronic device 20 may display a home screen 900 shown in FIG. 9(1). Then, when the electronic device 20 detects a fist in the air release gesture, as shown in FIG. 9(2), the electronic device 20 may present a fist icon 901 on the home screen 900.

For another example, when detecting that the fist in the air release gesture moves in from a front of the electronic device 20, the electronic device 20 may further present a gesture movement animation effect shown in FIG. 9(2). For another example, when the electronic device 20 further detects a palm in the air release gesture, the electronic device 20 may further present a light shadow animation effect on the home screen 900.

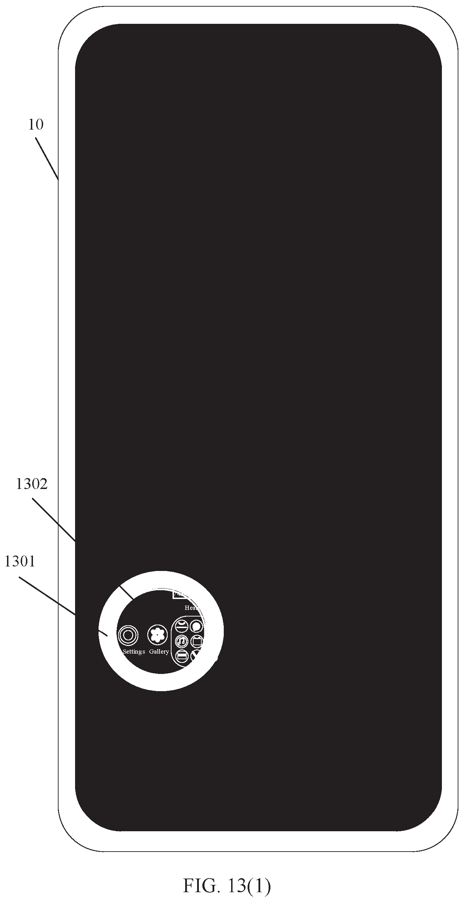

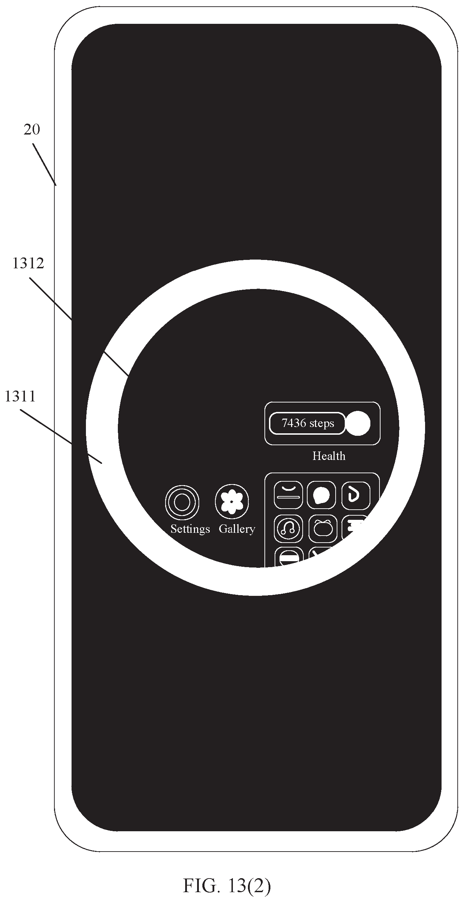

Similarly, in this scenario, in a process in which the electronic device 10 sends the screenshot 1220 to the electronic device 20, the electronic device 10 may further present a sending animation effect and/or the electronic device 20 may further present a receiving animation effect. For example, the sending animation effect presented by the electronic device 10 may be shown in FIG. 13(1). The sending animation effect may include a preview image 1302 and a light shadow 1301. The receiving animation effect presented by the electronic device 20 is shown in FIG. 13(2). The receiving animation effect may include a preview image 1312 and a light shadow 1311. The preview image 1312 and the preview image 1302 may be preview images of the screenshot 1220. For animation effects of the sending animation effect shown in FIG. 13(1) and the receiving animation effect shown in FIG. 13(2), refer to the corresponding descriptions of the sending animation effect shown in FIG. 10(1) and FIG. 10(2) and the receiving animation effect shown in FIG. 11(1), FIG. 11(2), and FIG. 11(3).

Similarly, in this scenario, in the process in which the electronic device 10 sends the screenshot 1220 to the electronic device 20, the electronic device 10 may alternatively automatically jump from presenting the sending animation effect shown in FIG. 13(1) to presenting a live capsule. For example, the electronic device 10 may present an interface shown in FIG. 11(2), and the electronic device 20 may alternatively automatically jump from presenting the receiving animation effect shown in FIG. 13(2) to presenting a live capsule. For example, the electronic device 20 may also present the interface shown in FIG. 11(2).

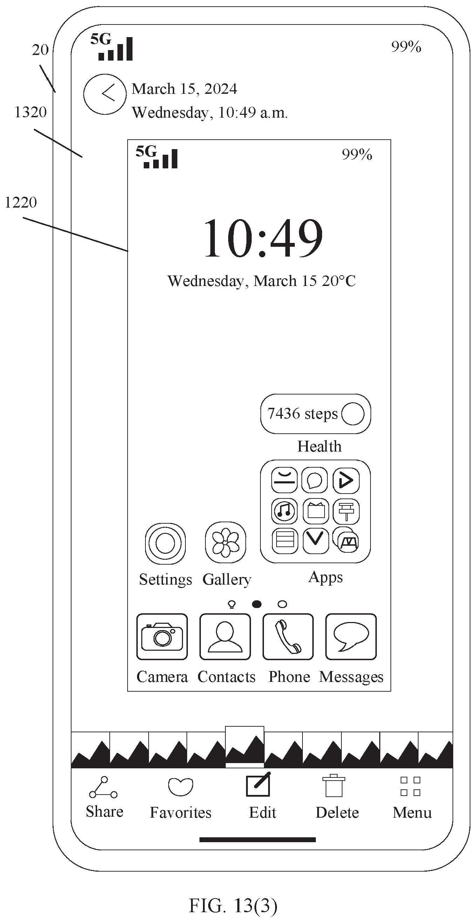

Similarly, in this scenario, after sharing of the screenshot 1220 between the electronic device 10 and the electronic device 20 is completed, the electronic device 10 may return to the home screen 1200 shown in FIG. 12(1). Optionally, the electronic device 20 may present the received screenshot 1220. For example, as shown in FIG. 13(3), the electronic device 20 may present an interface 1320 of a gallery application, to present the received screenshot 1220.

Based on the solution in this scenario, when an application (for example, including but not limited to a system application, a third-party application, or the like) does not have a capability of implementing cross-device resource sharing by using the air sharing service, cross-device resource sharing may be implemented by using a screenshot. After the user performs the air grab gesture on the resource sending end, the resource sending end may send the indication message to an external device to indicate that the resource sending end is about to send a resource. After the resource receiving end receives the indication message and the air release gesture, the resource sending end may send the resource (for example, an interface of an application) to the resource receiving end by using a screenshot. In this way, cross-device resource sharing can be more convenient and intelligent, and even when an application does not access the air sharing service provided in this solution, cross-device resource sharing can be implemented by using a screenshot, thereby ensuring user experience.

Optionally, in the foregoing scenario, system accounts (for example, Huawei accounts) logged in to on the electronic device 10 and the electronic device 20 may be the same, or may be different. In some embodiments, when the system accounts logged in to on the electronic device 10 and the electronic device 20 are different, a trust relationship may be further established between the electronic device 10 and the electronic device 20, to improve security of cross-device resource sharing.

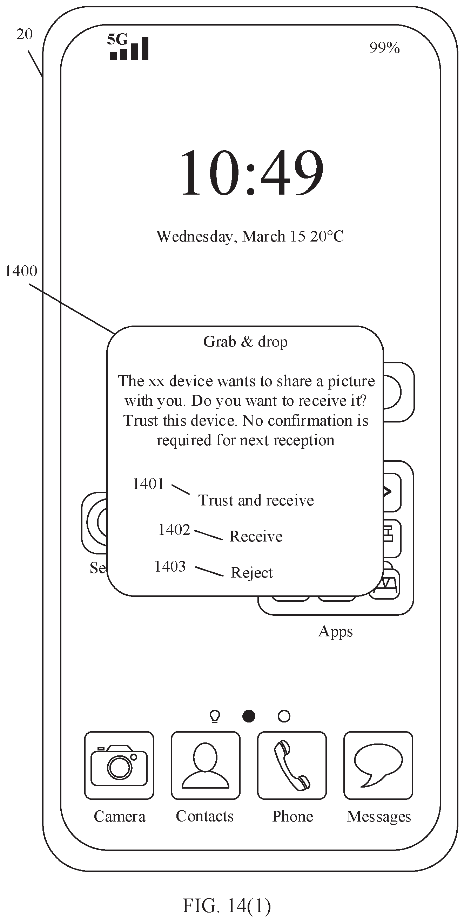

For example, when the electronic device 20 receives the resource receiving gesture such as the fist-to-palm air release gesture, in response to the operation, before the electronic device 20 receives the shared resource from the electronic device 10, the electronic device 20 may remind the user of at least one of the following: whether to receive the resource from the electronic device 10 and whether to establish a trust relationship with the electronic device 10. Optionally, before presenting the animation effect of cross-device resource sharing, after presenting the animation effect of cross-device resource sharing, or when presenting the animation effect of cross-device resource sharing, the electronic device 20 may remind the user of at least one of the following: whether to receive the resource from the electronic device 10 and whether to establish a trust relationship with the electronic device 10. For example, with reference to the scenario shown in FIG. 9(1), FIG. 9(2), FIG. 9(3), and FIG. 9(4), the electronic device 20 may present a reminder message 1400 shown in FIG. 14(1). A trust and receive button 1401, a receive button 1402, and a reject button 1403 are displayed in the reminder message 1400. The trust and receive button 1401 may be used by the electronic device 20 to receive the shared resource from the electronic device 10 and establish a trust relationship with the electronic device 10. The receive button 1402 may be used by the electronic device 20 only to receive the shared resource from the electronic device 10, but not to establish a trust relationship with the electronic device 10. The reject button 1403 may be used by the electronic device 20 to reject receiving of the shared resource from the electronic device 10.

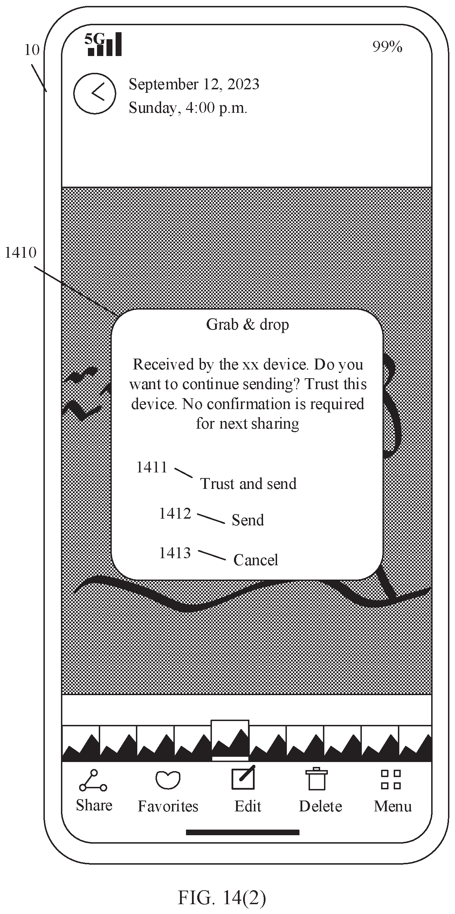

For example, if the user performs an operation such as tap on the trust and receive button 1401 shown in FIG. 14(1), in response to the operation, the electronic device 10 may remind the user of at least one of the following: whether to send the resource to the electronic device 20 and whether to establish a trust relationship with the electronic device 20. For example, with reference to the scenario shown in FIG. 7(1), FIG. 7(2), FIG. 7(3), FIG. 7(4), and FIG. 7(5), the electronic device 10 may present a reminder message 1410 shown in FIG. 14(2). A trust and send button 1411, a send button 1412, and a cancel button 1413 are displayed in the reminder message 1410. The trust and send button 1411 may be used by the electronic device 10 to send the resource to the electronic device 20 and establish a trust relationship with the electronic device 20. The send button 1412 may be used by the electronic device 10 only to send the resource, but not to establish a trust relationship with the electronic device 20. The cancel button 1413 may be used by the electronic device 10 to cancel sending of the resource. It may be understood that the electronic device 10 receives the resource sending gesture before presenting the reminder message 1410 shown in FIG. 14(2). In this way, the electronic device 10 presents the reminder message 1410, so that a trust relationship can be established with the electronic device 20.

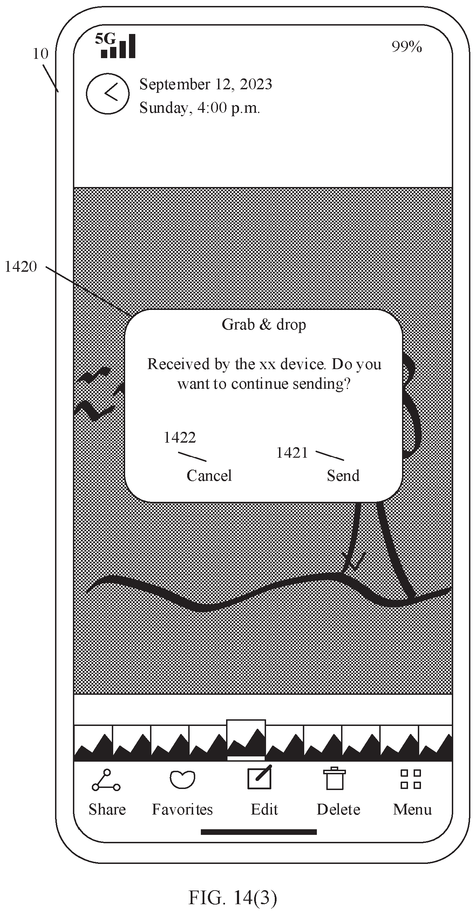

In this example, the user may perform an operation such as tap on the trust and send button 1411 shown in FIG. 14(2). In response to the operation, a trust relationship is established between the electronic device 10 and the electronic device 20. Subsequently, when cross-device resource sharing is performed between the electronic device 10 and the electronic device 20, resource sharing may be directly performed. The electronic device 10 may no longer present the reminder message shown in FIG. 14(2), and the electronic device 20 may no longer present the reminder message shown in FIG. 14(1). In this way, cross-device resource sharing can be faster and more convenient. On the contrary, when the user does not perform an operation such as tap on the trust and send button 1411 shown in FIG. 14(2), but performs an operation such as tap on the send button 1412 shown in FIG. 14(2), in response to the operation, only sharing of the resource is performed and no trust relationship is established between the electronic device 10 and the electronic device 20. Subsequently, when cross-device resource sharing is performed between the electronic device 10 and the electronic device 20, the electronic device 20 still presents the reminder message shown in FIG. 14(1), and the electronic device 20 still presents the reminder message shown in FIG. 14(2), or presents a reminder message shown in FIG. 14(3). In this way, security of cross-device resource sharing can be further ensured.

For another example, if the user performs an operation such as tap on the receive button 1402 shown in FIG. 14(1), in response to the operation, the electronic device 10 may remind the user whether to send the resource to the electronic device 20. For example, the electronic device 10 may present a reminder message 1420 shown in FIG. 14(3). In the reminder message 1420, a trust and send button is no longer presented, but only a send button 1421 and a cancel button 1422 are presented. For descriptions of the send button 1421 and the cancel button 1422, refer to the corresponding descriptions of the send button 1412 and the cancel button 1413 shown in FIG. 14(2). In this example, the user may perform an operation such as tap on the send button 1421 shown in FIG. 14(3), to implement sharing of the resource between the electronic device 10 and the electronic device 20. However, no trust relationship is established between the electronic device 10 and the electronic device 20. Subsequently, when cross-device resource sharing is performed between the electronic device 10 and the electronic device 20, the electronic device 20 still presents the reminder message shown in FIG. 14(1), and the electronic device 10 still presents the reminder message shown in FIG. 14(2), or presents a reminder message shown in FIG. 14(3).

In some embodiments, after an electronic device establishes a trust relationship with another electronic device in the foregoing manner or the like, the electronic device may further notify a user of an electronic device establishing a trust relationship with the electronic device. In a possible example, as shown in FIG. 8(1), the electronic device may simultaneously present, in an interface 800, identifiers of electronic devices establishing a trust relationship with the electronic device, for example, a device 1, a device 2, and the like. Certainly, the electronic device may alternatively present, in another interface, the identifier of the electronic device establishing a trust relationship with the electronic device. This is not limited in this embodiment of this application.

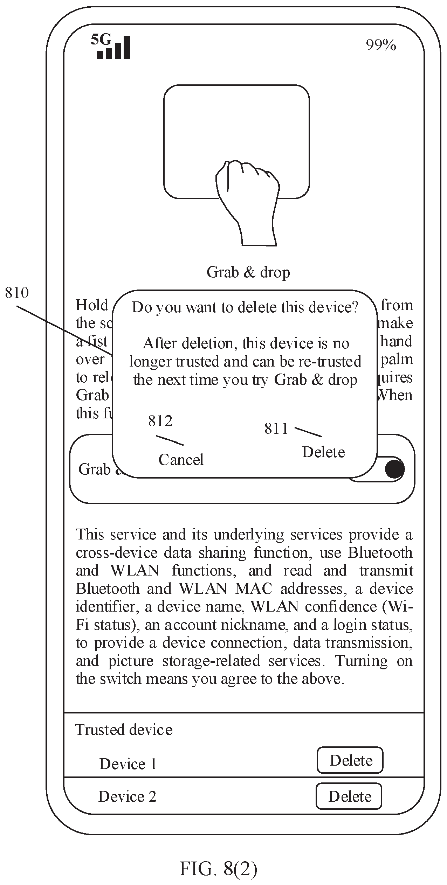

In some embodiments, the user may further change a trust relationship between electronic devices, for example, remove the trust relationship between the electronic devices or the like. It may be understood that after the trust relationship between the electronic devices is removed, a reminder message shown in FIG. 14(1), FIG. 14(2), and FIG. 14(3) may be presented subsequently when resource sharing is performed again between the electronic devices. As shown in FIG. 8(1), when the electronic device presents the identifier of the electronic device establishing a trust relationship with the electronic device, a delete button 802 may be further presented, so that the user can change the established trust relationship. For example, the user may perform an operation such as tap on a delete button 802 corresponding to the device 1. In response to the operation, the electronic device may remove the trust relationship established with the device 1. Optionally, before successfully removing the trust relationship established with the device 1, the electronic device may further remind the user to confirm whether to remove the trust relationship with the device 1. For example, the electronic device may present a reminder message 810 shown in FIG. 8(2). A delete button 811 and a cancel button 812 may be displayed in the reminder message 810. If the electronic device detects, for example, a tap operation performed by the user on the delete button 811, in response to the operation, the electronic device determines to remove the trust relationship established with the device 1. On the contrary, if the electronic device detects, for example, a tap operation performed by the user on the cancel button 812, in response to the operation, the electronic device does not remove the trust relationship established with the device 1.

Certainly, when the system accounts logged in to on the electronic device 10 and the electronic device 20 are different, before sending a resource, the electronic device 10 may directly remind the user whether to send the resource, and/or before receiving a resource, the electronic device x20 may directly remind the user whether to receive the resource. In other words, the electronic device 10 and the electronic device 20 may not execute the foregoing reminder for establishing a trust relationship, to ensure security of cross-device resource sharing.

The foregoing describes cross-device resource sharing processes in different scenarios. In the foregoing descriptions, an example in which there is one resource sending end and one resource receiving end is used.

In some other embodiments, there may be one resource sending end and a plurality of resource receiving ends. In other words, a resource sent by one electronic device may be simultaneously received by a plurality of other electronic devices (for example, the first electronic device and a third electronic device). In this embodiment, each resource receiving end may receive a resource from the resource sending end with reference to the solution described in the foregoing scenario, and the resource sending end may send a resource with reference to the solution described in the foregoing scenario.

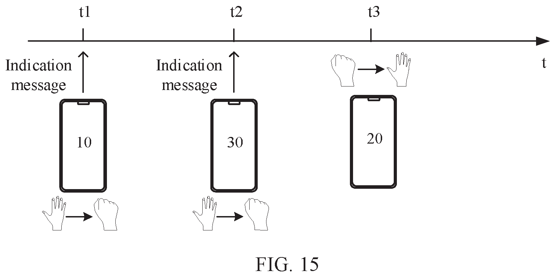

In some other embodiments, there may be a plurality of resource sending ends and one resource receiving end. For example, the resource sending ends are the electronic device 10 and an electronic device 30, and the resource receiving end is the electronic device 20. In this embodiment, the resource receiving end 20 may receive an indication message from the electronic device 10 and an indication message from the electronic device 30 (which may be used as an example of an indication message from a third electronic device). It may be understood that the indication message from the electronic device 10 and the indication message from the electronic device 30 may be simultaneously received by the electronic device 20, or may be sequentially received by the electronic device 20. However, regardless of a sequence in which the indication messages are received, these indication messages are received before a resource receiving gesture. For example, the indication message from the electronic device 10 and the indication message from the electronic device 30 are sequentially received by the electronic device 20. FIG. 15 is a diagram of an information receiving sequence of an electronic device 20 according to an embodiment of this application. As shown in FIG. 15, the indication message from the electronic device 10 is received at a moment t1, in other words, the electronic device 10 receives a resource sending gesture at the moment t1. The indication message from the electronic device 30 is received at a moment t2, in other words, the electronic device 30 receives the resource sending gesture at the moment t2. The resource receiving gesture is received at a moment t3. The indication message from the electronic device 10 is received earliest, and the resource receiving gesture is received latest.

When the electronic device 20 receives the resource receiving gesture performed by the user, in response to the gesture, the electronic device 20 may determine, based on a preset rule, a specific electronic device from which a resource is to be received. In a possible implementation, the preset rule may include: receiving, by default, only a resource in an electronic device whose system account is the same as that of the electronic device 20. For example, if a system account of the electronic device 10 is the same as the system account of the electronic device 20, and a system account of the electronic device 30 is different from the system account of the electronic device 20, the electronic device 20 may determine to receive a resource from the electronic device 10, but not to receive a resource from the electronic device 30. Optionally, in this implementation, there may be one or more electronic devices whose system accounts are the same as that of the electronic device 20. When there are a plurality of electronic devices, the electronic device 20 may simultaneously receive resources in these electronic devices whose system accounts are the same.

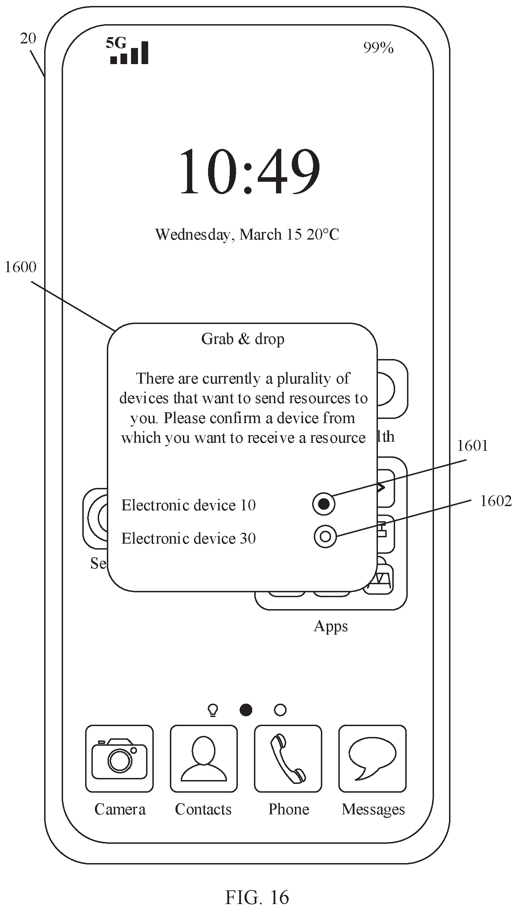

In another possible implementation, the preset rule may include: determining, based on user selection, an electronic device from which a resource is to be received. For example, the electronic device may remind the user that it is currently perceived that a plurality of electronic devices are to send resources, and please select a specific electronic device that sends a resource to be received. For example, the electronic device 20 may display a reminder message 1600 shown in FIG. 16 for the user to perform selection. For example, if the user chooses to receive the resource from the electronic device 10, the user may perform a select operation on a select button 1601 of the electronic device 10. In response to the operation, the electronic device 20 may determine to receive the resource from the electronic device 10. If the user chooses to receive the resource from the electronic device 30, the user may perform a select operation on a select button 1602 of the electronic device 30. In response to the operation, the electronic device 20 may determine to receive the resource from the electronic device 30. Optionally, in this implementation, the user may select one or more electronic devices. This is not limited in this embodiment of this application. Optionally, in this implementation, there may be an electronic device whose system account is the same as that of the electronic device 20, or there may be no electronic device whose system account is the same as that of the electronic device 20.

Optionally, the foregoing two implementations may be separately used, or may be used in combination. In a possible combination manner, for example, when there is an electronic device whose system account is the same as that of the electronic device 20, the electronic device 20 may receive a resource by using the first implementation. When there is only an electronic device whose system account is different from that of the electronic device 20, the electronic device 20 may receive a resource by using the second implementation.

Certainly, the preset rule may alternatively be implemented as another rule. For example, an electronic device from which a resource is to be received is determined based on a time sequence of receiving an indication message. For example, a resource in an electronic device from which an indication message is received earliest may be received, or a message in an electronic device from which an indication message is received latest may be received.

For another implementation in this embodiment, refer to the implementation in the foregoing scenario.

In the foregoing embodiment, an implementation in which an electronic device sends a resource and an electronic device receives a resource is described. In some other embodiments, when sending a resource, an electronic device may further receive a resource. When receiving a resource, an electronic device may further send a resource, to implement a scenario in which electronic devices share a resource with each other. The electronic device 10 and the electronic device 20 are used as an example. The electronic device 10 and the electronic device 20 may simultaneously recognize a resource sending gesture, or may simultaneously recognize a resource receiving gesture. For example, the user may simultaneously perform a resource sending gesture such as a palm-to-fist air grab gesture on the electronic device 10 and the electronic device 20. The electronic device 10 and the electronic device 20 may simultaneously recognize the gesture. Then, the user may choose to first perform a resource receiving gesture on one of the electronic devices, for example, first release a fist in a resource sending gesture corresponding to one of the electronic devices. For example, the user first releases a fist in the air grab gesture performed on the electronic device 10. Correspondingly, the electronic device 10 may first recognize the resource receiving gesture. In this case, in response to the resource sending gesture received by the electronic device 20 and the resource receiving gesture received by the electronic device 10, the electronic device 20 sends a resource to the electronic device 10, and the electronic device 10 receives the resource from the electronic device 20. Optionally, in this process, when presenting the to-be-sent animation effect shown in FIG. 7(3), the electronic device 10 may remind the user that the resource is received. For example, the electronic device 10 may further present a resource receiving animation effect, for example, various resource receiving animation effects such as an animation effect in which the card 712 in the to-be-sent animation effect shown in FIG. 7(3) is compressed downward and then rebounded, to remind the user that the electronic device 10 receives the resource.

Further, after the electronic device 20 continues to receive a resource receiving gesture performed by the user, the electronic device 20 may continue to recognize the resource receiving gesture. In this case, in response to the resource sending gesture received by the electronic device 10 and the resource receiving gesture received by the electronic device 20, the electronic device 10 sends a resource to the electronic device 20, and the electronic device 20 receives the resource from the electronic device 10. Optionally, in this example, after the electronic device 10 completes sending of the resource to the electronic device 20, the electronic device may present the resource received from the electronic device 20, and does not return to an interface existing before the resource is sent. An implementation in which the user first performs a resource receiving gesture on the electronic device 20 is similar to this.

Certainly, the user may alternatively simultaneously perform a fist-to-palm resource receiving gesture on the two electronic devices. The electronic device 10 and the electronic device 20 may further simultaneously recognize the gesture. In this case, in response to the resource sending and resource receiving gestures, the electronic device 10 sends a resource to the electronic device 20, and receives a resource sent by the electronic device 20, and the electronic device 20 receives the resource sent by the electronic device 10, and sends the resource to the electronic device 10. Alternatively, in another embodiment, the user may alternatively sequentially perform a resource sending gesture on the two electronic devices, but simultaneously perform a resource receiving gesture on the two electronic devices. In this way, mutual resource transmission between the two electronic devices can also be implemented.

In some embodiments, the indication message sent by the first electronic device may be sent by using a broadcast message. The broadcast message may be a Bluetooth broadcast message, or may be a Wi-Fi broadcast message or a SparkLink broadcast message. Certainly, other messages may alternatively be used for sending, for example, various messages such as Wi-Fi, NFC, ZigBee (ZigBee), universal serial bus (universal serial bus, USB), and cellular (Cellular). The first electronic device may send a resource to the second electronic device based on a connection established between the first electronic device and the second electronic device. That is, after receiving the indication message from the first electronic device, the second electronic device may establish a connection to the first electronic device. For example, the connection may be a Wi-Fi connection. Certainly, when another communication protocol is used, the connection may alternatively be another connection, for example, a Bluetooth connection, a cellular connection, or the like.

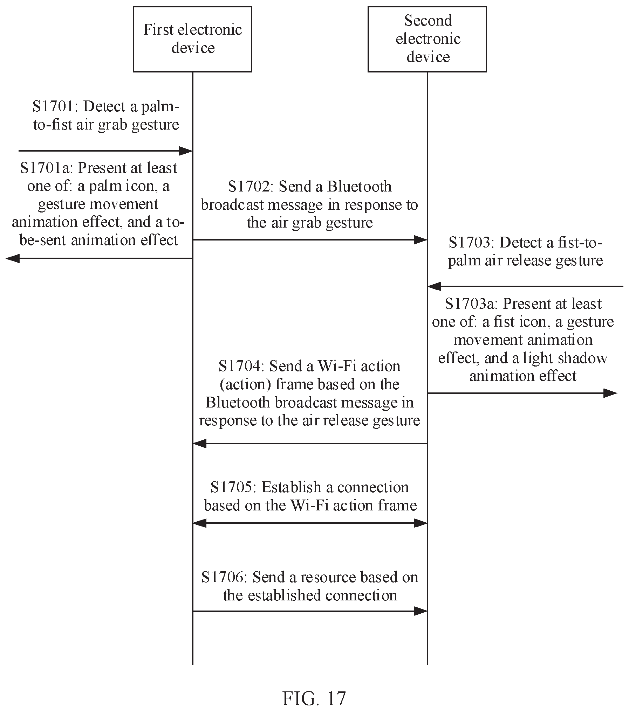

In the following embodiments, an example in which the indication message sent by the first electronic device is a Bluetooth broadcast message, and the connection established between the second electronic device and the first electronic device is a Wi-Fi connection is used to describe a cross-device resource sharing method provided in embodiments of this application. For example, FIG. 17 is a schematic flowchart of a cross-device resource sharing method according to an embodiment of this application. As shown in FIG. 17, the method includes the following steps.

S1701: A first electronic device detects a palm-to-fist air grab gesture.

In some embodiments, before performing step S1701, the first electronic device may display an application interface. The application interface may be, for example, the home screen 1200 shown in FIG. 12(1) and FIG. 12(2), the interface 700 of the gallery application shown in FIG. 7(1) and FIG. 7(2), or the like. The air grab gesture may be used to share a resource included in the application interface with another electronic device.

Optionally, in a process of performing step S1701, the first electronic device may further perform step S1701a.

S1701a: The first electronic device presents at least one of: a palm icon, a gesture movement animation effect, and a to-be-sent animation effect.

For presentation of the palm icon, the gesture movement animation effect, and the to-be-sent animation effect in step S1701a, refer to the related descriptions of presentation by the electronic device 10 shown in FIG. 7(1), FIG. 7(2), FIG. 7(3), FIG. 7(4), and FIG. 7(5).

S1702: The first electronic device sends a Bluetooth broadcast message in response to the air grab gesture. Correspondingly, a second electronic device may receive the Bluetooth broadcast message from the first electronic device.

It may be understood that an electronic device other than the second electronic device may also receive the Bluetooth broadcast message from the first electronic device.

The Bluetooth broadcast message carries an indication message, and the indication message may indicate that the first electronic device is about to send a resource in the first electronic device.

In some embodiments, another electronic device may simultaneously send a Bluetooth broadcast message to an external device, and different Bluetooth broadcast messages may have different purposes. For example, the Bluetooth broadcast message from the first electronic device is used to implement cross-device resource sharing, and the Bluetooth broadcast message from the another electronic device may be used to implement an audio connection, another purpose, or the like. Therefore, to facilitate recognition of Bluetooth broadcast messages having different purposes, the Bluetooth broadcast message may further carry a cross-end resource sharing service identifier, and the service identifier may represent that the Bluetooth broadcast message is a broadcast message used to implement cross-device resource sharing.

Optionally, in this embodiment of this application, when sending a broadcast message to the external device, the first electronic device may use a low power mode, for example, a low power Bluetooth mode, a low power SparkLink mode, or the like. In this way, power consumption of the first electronic device can be reduced.

Optionally, the gesture movement animation effect and the to-be-sent animation effect may be simultaneously presented or sequentially presented with step S1702.

S1703: The second electronic device detects a fist-to-palm air release gesture.

Optionally, before performing step S1703, the second electronic device may present any application interface, or may present a screen-off interface, a lock screen interface, or the like.

Optionally, in a process of performing step S1703, the second electronic device may further perform step S1703a.

S1703a: The second electronic device presents at least one of: a fist icon, a gesture movement animation effect, and a light shadow animation effect.

For presentation of the fist icon, the gesture movement animation effect, and the light shadow animation effect in step S1703a, refer to the related descriptions of presentation by the electronic device 20 shown in FIG. 9(1), FIG. 9(2), FIG. 9(3), and FIG. 9(4).

S1704: The second electronic device sends a Wi-Fi action frame to the first electronic device based on the Bluetooth broadcast message in response to the air release gesture.

The Wi-Fi action frame may be used to establish a Wi-Fi connection between the first electronic device and the second electronic device.

Similarly, in some embodiments, different Wi-Fi action frames may have different purposes. Therefore, to facilitate recognition of Wi-Fi action frames having different purposes, the Wi-Fi action frame may also carry the cross-end resource sharing service identifier.

S1705: The first electronic device establishes a connection to the second electronic device based on the Wi-Fi action frame.

It may be understood that in this embodiment of this application, an example in which the broadcast message sent by the first electronic device and the connection established between the first electronic device and the second electronic device are implemented based on different communication protocols is used. In another embodiment, the broadcast message sent by the first electronic device and the connection established between the first electronic device and the second electronic device may alternatively be implemented based on a same communication protocol, for example, may be implemented based on Wi-Fi.

It may be further understood that in step S1704 and step S1705, an example in which the second electronic device first sends the Wi-Fi action frame to the first electronic device, and then the first electronic device establishes a connection to the second electronic device based on the Wi-Fi action frame is used. In another implementation, the second electronic device may directly establish a connection to the first electronic device in response to the air sending gesture, that is, does not need to send the Wi-Fi action frame to the first electronic device, that is, step S1704 may be an optional step. Correspondingly, S1705 is changed to the following: The first electronic device establishes a connection to the second electronic device based on the indication message.

S1706: The first electronic device sends a resource to the second electronic device based on the established connection. Correspondingly, the second electronic device receives the resource from the first electronic device based on the established connection.

Optionally, the resource may be a resource included in the application interface presented by the first electronic device before step S1701 is performed, for example, a picture in the scenario shown in FIG. 7(1), FIG. 7(2), FIG. 7(3), FIG. 7(4), and FIG. 7(5), a screenshot in the scenario shown in FIG. 12(1), FIG. 12(2), FIG. 12(3), and FIG. 12(4), or the like.

In some embodiments, in a process in which the first electronic device performs step S1706, the first electronic device may further present a sending animation effect, and the second electronic device may further present a receiving animation effect. Optionally, the receiving animation effect may be generated based on preview data of the resource sent by the first electronic device to the second electronic device. The preview data may be, for example, a preview image described in the foregoing scenario. Certainly, the preview data may alternatively be another type of data. In this implementation, to enable the second electronic device to present the receiving animation effect, the first electronic device further needs to perform an operation of generating the preview data and sending the preview data to the second electronic device.

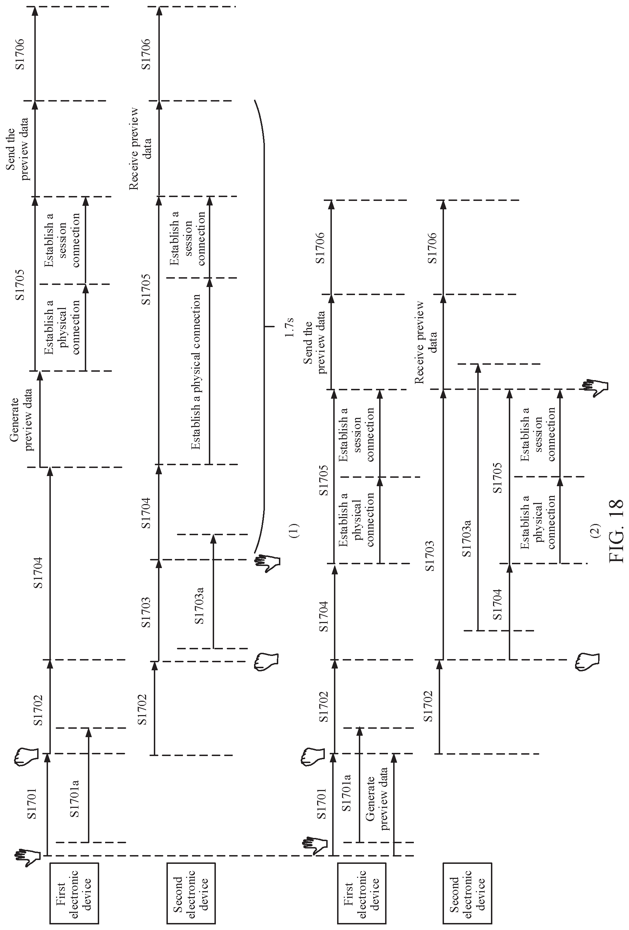

In this embodiment, in a possible implementation, as shown in (1) in FIG. 18, the first electronic device may perform, after step S1704, an operation of generating the preview data, and then perform step S1705. Optionally, as shown in (1) in FIG. 18, a process of establishing the connection in step S1705 may include a process of establishing a physical connection and establishing a session (session) connection. Then, after performing step S1705, the first electronic device may perform an operation of sending the preview data to the second electronic device, and then perform step S1706. Correspondingly, the second electronic device may perform step S1705 after performing step S1704. After step S1705 is performed, an operation of receiving the preview data is performed, and then step S1706 is performed. Optionally, in a process of performing step S1706, the first electronic device may further present the foregoing live capsule. Similarly, in a process of performing step S1706, the second electronic device may also present the foregoing live capsule.

In the foregoing implementation, after the second electronic device receives the air release gesture, the second electronic device sends the Wi-Fi action frame (that is, step S1704), and the first electronic device performs operations such as generating the preview data, establishing a connection (that is, step S1705), and sending the preview data. The Wi-Fi action frame is sent to the first electronic device in approximately 50 milliseconds (ms), duration for generating the preview data is approximately 510 ms, duration for establishing a connection is approximately 950 ms, and duration for sending the preview data is approximately 40 ms. Therefore, before the second electronic device receives the resource from the first electronic device, as shown in (1) in FIG. 18, a delay that can be perceived by a user is approximately 1.7 seconds (s). The delay is long, which is unfavorable to user experience.

Therefore, to resolve the foregoing problem of a long user-perceived delay, in another possible implementation, as shown in (2) in FIG. 18, in a process of performing step S1701, for example, when detecting a start gesture in a resource sending gesture, the first electronic device may perform an operation of generating the preview data, that is, perform an operation of generating the preview data in advance, and/or the second electronic device may further perform, in a process of recognizing the air release gesture, a process of establishing a connection to the first electronic device, that is, perform an operation of establishing a connection in advance. As shown in (2) in FIG. 18, the second electronic device may establish the communication connection to the first electronic device when receiving a fist in the air release gesture, that is, when performing step S1704 and step S1705, that is, when detecting a start gesture in a resource receiving gesture. After step S1705 is performed, and when the second electronic device receives a palm in the air release gesture, the first electronic device may perform an operation of sending the preview data to the second electronic device, and then perform step S1706. Correspondingly, after performing step S1705 and when receiving the palm in the air release gesture, the second electronic device may perform, based on the communication connection to the first electronic device, an operation of receiving the preview data, and then perform step S1706. Similarly, in this implementation, in a process of performing step S1706, the first electronic device may further present the foregoing live capsule. Similarly, in a process of performing step S1706, the second electronic device may also present the foregoing live capsule.

In this implementation, after receiving the air release gesture, the second electronic device only needs to perform an operation of sending the preview data. Therefore, before the second electronic device receives the resource from the first electronic device, there is only a perceived delay of transmitting the preview data. This can greatly reduce the user-perceived delay, and improve user experience.

Optionally, in this implementation, the operation of generating the preview data in advance and the operation of establishing a connection in advance may be separately or simultaneously used. However, regardless of which manner is used, compared with the foregoing implementation, this can reduce the user-perceived delay, and improve user experience.

It may be understood that for descriptions of the steps shown in FIG. 18, refer to the descriptions of the corresponding steps shown in FIG. 17.

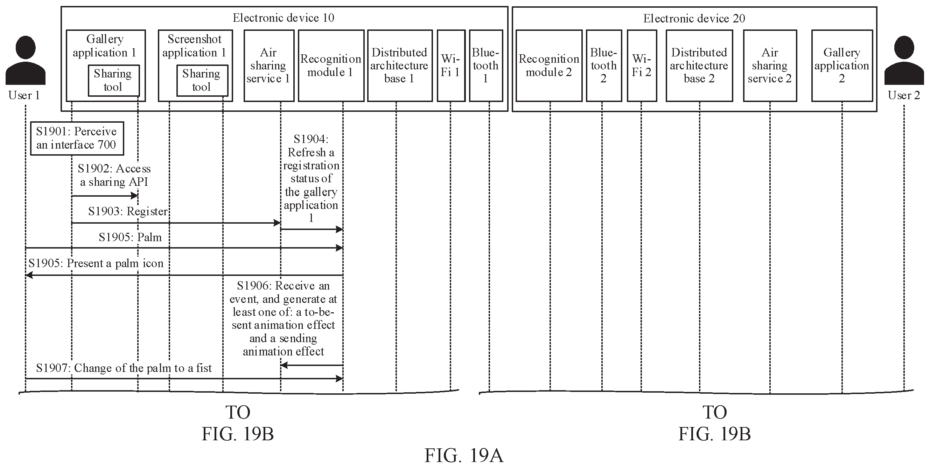

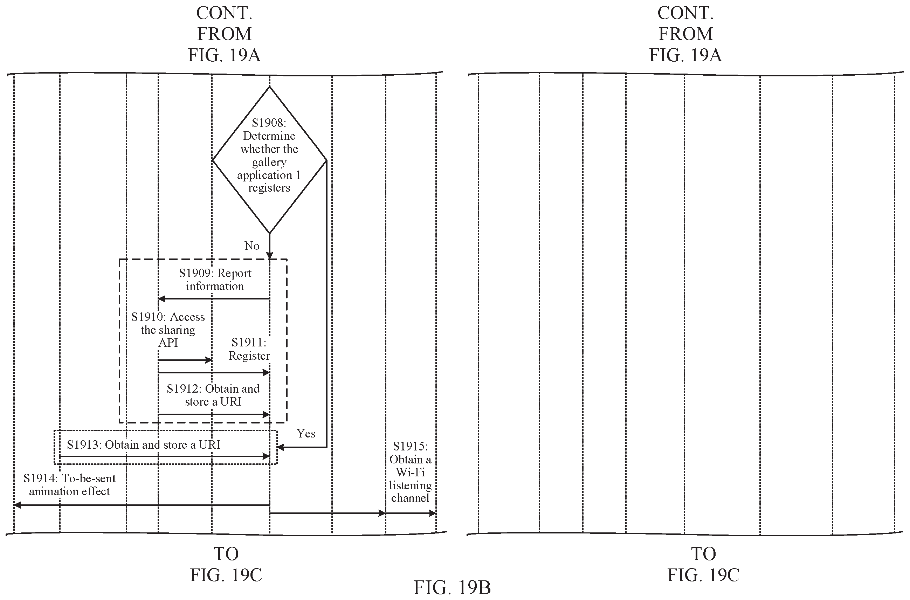

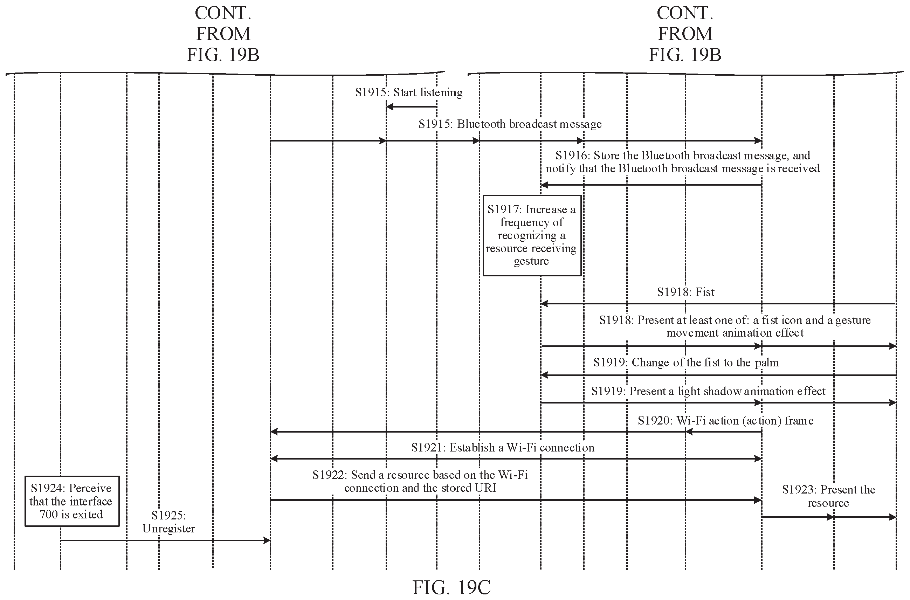

For example, with reference to the architecture shown in FIG. 6 and the scenario of sharing a picture in a gallery application shown in FIG. 7(1), FIG. 7(2), FIG. 7(3), FIG. 7(4), and FIG. 7(5) and the like, an example in which an electronic device 10 is a resource sending end and an electronic device 20 is a resource receiving end is still used. FIG. 19A, FIG. 19B, and FIG. 19C are a schematic flowchart of another cross-device resource sharing method according to an embodiment of this application. It may be understood that for ease of differentiation, in FIG. 19A, FIG. 19B, and FIG. 19C, modules that have a same function in different electronic devices are represented by using different sequence numbers, for example, an air sharing service 1, an air sharing service 2, and the like. It may be further understood that a user 1 and a user 2 may be respectively users of the electronic device 10 and the electronic device 20. As shown in FIG. 19A, FIG. 19B, and FIG. 19C, the method includes the following steps.

S1901: A gallery application 1 in the electronic device 10 perceives an interface 700.

The interface 700 is the interface shown in FIG. 7(1).

S1902: The gallery application 1 accesses a sharing API of a sharing tool.

S1903: The gallery application 1 registers with the air sharing service 1 of the electronic device 10.

The gallery application 1 may perform the registration by using the sharing API in step S1902.

It may be understood that in step S1901 to step S1903, an example in which step S1902 and step S1903 are performed only when the gallery application 1 presents a specific interface (herein, the interface 700 shown in FIG. 7(1)) is used. In other words, when the gallery application 1 presents a non-specific interface, step S1902 and step S1903 may not be performed.

Based on step S1901 to step S1903, when presenting an interface, the gallery application performs an operation of registering with the air sharing service, that is, registering with the air sharing service in real time. In this way, when exiting presentation of the interface, the gallery application can unregister from the air sharing service, to support the gallery application in supporting cross-device sharing of resources only in some specific interfaces.

S1904: The air sharing service 1 refreshes a registration status of the gallery application 1 in a recognition module 1.

Step S1904 may alternatively be described as storing a registration event of the gallery application 1, to indicate that the gallery application 1 registers with the air sharing service 1. Optionally, the registration event of the gallery application 1 may be stored in the air sharing service 1, or may be stored in the recognition module 1.

S1905: The recognition module 1 recognizes a palm, and presents a palm icon.

For example, the palm icon may be the palm icon 702 shown in FIG. 7(2).

S1906: The air sharing service 1 receives an event reported by the recognition module 1, and generates at least one of a to-be-sent animation effect and a sending animation effect.

The event may be used to notify the air sharing service 1 that the palm is recognized.

Based on step S1906, when the palm is recognized, at least one of the to-be-sent animation effect and the sending animation effect is generated, that is, the data is prepared in advance, so that these animation effects can be subsequently played in a timely manner, to reduce a user-perceived delay.

S1907: The recognition module 1 recognizes that the palm changes to a fist.

In step S1907, the recognition module 1 may further report an event to the air sharing service 1. The event may be used to notify the air sharing service 1 that the palm is recognized.

S1908: The air sharing service 1 determines whether the gallery application 1 registers.

If the gallery application 1 does not register, step S1909 to step S1912 may be performed. If the gallery application 1 registers, step S1913 may be performed.

S1909: The air sharing service 1 reports information to a screenshot application 1.

The reported information may indicate that the gallery application 1 does not register with the air sharing service 1. Optionally, the reported information may further indicate whether the electronic device 10 enables a cross-device resource sharing function.

S1910: The screenshot application 1 accesses the sharing API of the sharing tool.

S1911: The screenshot application 1 registers with the air sharing service 1.

The screenshot application 1 may perform the registration by using the sharing API in step S1911.

S1912: The air sharing service 1 obtains and stores a uniform resource identifier (uniform resource identifier, URI) from the screenshot application 1.

The URI may be a URI of a to-be-shared resource in the screenshot application 1, for example, may be an RUI of a screenshot generated by the screenshot application 1, for example, a URI of the screenshot 1220 in the scenario shown in FIG. 12(3). Certainly, in this embodiment of this application, the URI may alternatively be implemented as another identifier or other information, so that the air sharing service 1 obtains the to-be-shared resource.

It may be understood that step S1908 to step S1911 are performed by using an example in which the gallery application 1 does not register with the air sharing service 1. In another embodiment, step S1908 to step S1911 may alternatively be always performed, that is, step S1908 to step S1911 may be performed regardless of whether the gallery application 1 registers with the air sharing service 1. In this embodiment, the reported information in step S1909 may further indicate whether the gallery application 1 registers with the air sharing service 1. Subsequently, the air sharing service 1 may further determine, based on whether the gallery application 1 registers, where to obtain the URI. For example, when the air sharing service 1 determines that the gallery application 1 registers, the air sharing service 1 may perform step S1913. On the contrary, when the air sharing service 1 determines that the gallery application 1 does not register, the air sharing service 1 may perform step S1912.

S1913: The air sharing service 1 obtains and stores a URI from the gallery application 1.

The URI may be a URI of a to-be-shared resource in the gallery application 1. For example, with reference to step S1901, the URI may be a URI of the picture 701 shown in FIG. 7(1).

S1914: The air sharing service 1 presents the to-be-sent animation effect to the user 1.

For example, when the screenshot application 1 registers with the air sharing service, the to-be-sent animation effect may be the to-be-sent animation effect shown in FIG. 7(3). When the screenshot application 1 does not register with the air sharing service, the to-be-sent animation effect may be the to-be-sent animation effect shown in FIG. 12(3).

Optionally, before presenting the to-be-sent animation effect, the air sharing service 1 may further present the gesture movement animation effect shown in FIG. 7(4), the gesture movement animation effect shown in FIG. 12(4), or the like.

S1915: The air sharing service 1 obtains a Wi-Fi listening channel through a distributed architecture base 1, starts listening based on the Wi-Fi listening channel, and sends a Bluetooth broadcast message. Correspondingly, the air sharing service 2 of the electronic device 20 may receive the Bluetooth broadcast message based on a distributed architecture base 2.

The Wi-Fi listening channel may be used to listen to a Wi-Fi action frame. For descriptions of the Bluetooth broadcast message, refer to the descriptions of step S1704 shown in FIG. 17.

S1916: The air sharing service 2 stores the Bluetooth broadcast message, and notifies a recognition module 2 that the Bluetooth broadcast message is received.

Optionally, the electronic device 2 may simultaneously receive a plurality of Bluetooth broadcast messages, that is, there may be simultaneously a plurality of resource sending ends. Therefore, the air sharing service 2 stores the Bluetooth broadcast message, to subsequently determine a specific resource sending end from which a resource is to be received.

S1917: The recognition module 2 increases a frequency of recognizing a resource receiving gesture.

For descriptions of increasing, by the recognition module 2, the frequency of recognizing the resource receiving gesture, refer to the foregoing descriptions.

S1918: The recognition module 2 recognizes the fist, and presents at least one of: a fist icon and a gesture movement animation effect through the air sharing service 2.

In this step, the fist icon may be the fist icon 901 shown in FIG. 9(2), and the gesture movement animation effect may be the gesture movement animation effect shown in FIG. 9(1).

S1919: The recognition module 2 recognizes that the fist changes to the palm, and presents a light shadow animation effect through the air sharing service 2.

For the light shadow animation effect, refer to the foregoing light shadow animation effect.

S1920: The air sharing service 2 sends a Wi-Fi action frame to the air sharing service 1 through the distributed architecture base 2. Correspondingly, the air sharing service 1 receives the Wi-Fi action frame through the distributed architecture base 1.

Optionally, after receiving a Bluetooth broadcast message, the air sharing service 2 may immediately reply with a Wi-Fi action frame, to quickly establish a connection to the electronic device 10.

In some scenarios, the air sharing service 2 may fail to send the Wi-Fi action frame to the air sharing service 1 through the distributed architecture base 2. In this case, to ensure a reply success probability, the air sharing service 2 may further reply with a Wi-Fi action frame again after receiving a next Bluetooth broadcast message, to establish a connection to the electronic device 10.

S1921: The air sharing service 1 and the air sharing service 2 establish a Wi-Fi connection.

S1922: The air sharing service 1 sends a resource to the air sharing service 2 based on the Wi-Fi connection and the stored URI. Correspondingly, the air sharing service 2 receives the resource from the air sharing service 1.

Optionally, with reference to the scenario shown in FIG. 11(1), FIG. 11(2), and FIG. 11(3), the method shown in FIG. 19A, FIG. 19B, and FIG. 19C may further include step S1923.

S1923: The air sharing service 2 presents the resource through a gallery application 2.

S1924: The gallery application 1 perceives that the interface 700 is exited.

S1925: The gallery application 1 unregisters from the air sharing service 1.

It may be understood that in the procedure shown in FIG. 19A, FIG. 19B, and FIG. 19C, an example in which no connection is established in advance is used. This is also applicable to the solution in which a connection is established in advance shown in FIG. 17 and is also applicable to presentation of various animation effects shown in FIG. 17. The procedure shown in FIG. 19A, FIG. 19B, and FIG. 19C and the procedure shown in FIG. 17 may be mutually referenced. To avoid redundancy, solutions described in the procedure shown in FIG. 17, for example, various solutions such as generating preview data in advance, are not described in the procedure shown in FIG. 19A, FIG. 19B, and FIG. 19C.

It may be understood that a resource sharing scenario is used as an example in the solutions in embodiments of this application. The solutions provided in embodiments of this application may be applied to various scenarios such as projection, cross-device replication, and cross-device collaboration.

The foregoing mainly describes the solutions provided in embodiments of this application from the perspective of the method. It may be understood that to implement the foregoing functions, the electronic device includes a corresponding hardware structure and/or software module for performing each of the functions. With reference to the example units and algorithm steps described in embodiments disclosed in this application, embodiments of this application can be implemented in a form of hardware or a combination of hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in embodiments of this application.

In embodiments of this application, the electronic device may be divided into functional modules based on the foregoing method examples. For example, each functional module may be obtained through division for a corresponding function, or two or more functions may be integrated into one processing unit. The integrated unit may be implemented in a form of hardware, or may be implemented in a form of a software functional module. It should be noted that in embodiments of this application, division into the units is an example, and is merely logical function division. In actual implementation, another division manner may be used.

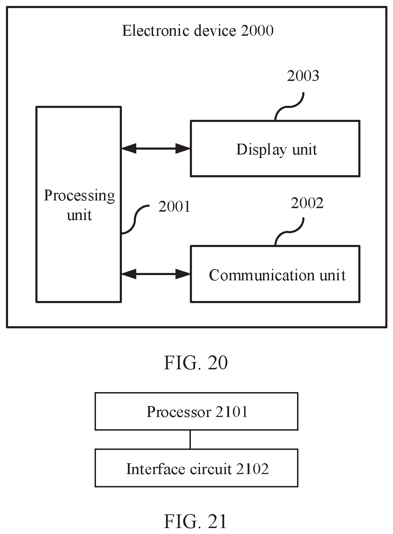

FIG. 20 is a diagram of a structure of an electronic device according to an embodiment of this application. The electronic device 2000 may be configured to implement the method performed by the electronic device described in the foregoing method embodiments. For example, the electronic device 2000 may include a processing unit 2001, a communication unit 2002, and a display unit 2003.

In a possible example, the electronic device 2000 is a first electronic device. The processing unit 2001 is configured to support the electronic device 2000 in performing the processing function of the first electronic device in any one of FIG. 1(1), FIG. 1(2), FIG. 1(3), and FIG. 1(4) to FIG. 19A, FIG. 19B, and FIG. 19C. The communication unit 2002 is configured to support the electronic device 2000 in performing the communication function of the first electronic device in any one of FIG. 1(1), FIG. 1(2), FIG. 1(3), and FIG. 1(4) to FIG. 19A, FIG. 19B, and FIG. 19C. The display unit 2003 is configured to support the electronic device 2000 in performing the display function of the first electronic device in any one of FIG. 1(1), FIG. 1(2), FIG. 1(3), and FIG. 1(4) to FIG. 19A, FIG. 19B, and FIG. 19C.

In another possible example, the electronic device 2000 is a second electronic device. The processing unit 2001 is configured to support the electronic device 2000 in performing the processing function of the second electronic device in any one of FIG. 1(1), FIG. 1(2), FIG. 1(3), and FIG. 1(4) to FIG. 19A, FIG. 19B, and FIG. 19C. The communication unit 2002 is configured to support the electronic device 2000 in performing the communication function of the second electronic device in any one of FIG. 1(1), FIG. 1(2), FIG. 1(3), and FIG. 1(4) to FIG. 19A, FIG. 19B, and FIG. 19C. The display unit 2003 is configured to support the electronic device 2000 in performing the display function of the second electronic device in any one of FIG. 1(1), FIG. 1(2), FIG. 1(3), and FIG. 1(4) to FIG. 19A, FIG. 19B, and FIG. 19C.

Optionally, the electronic device 2000 shown in FIG. 20 may further include a storage unit (not shown in FIG. 20), and the storage unit stores a program or instructions. When the processing unit 2001 executes the program or the instructions, the electronic device 2000 shown in FIG. 20 is enabled to perform the method in the foregoing method embodiments.

For technical effects of the electronic device 2000 shown in FIG. 20, refer to the technical effects in the foregoing method embodiments. Details are not described herein. The processing unit 2001 in the electronic device 2000 shown in FIG. 20 may be implemented by a processor or a processor-related circuit component, and may be a processor or a processing module. The communication unit 2002 may be implemented by a transceiver or a transceiver-related circuit component, and may be a transceiver or a transceiver module. The display unit 2003 may be implemented by a display screen-related component.

An embodiment of this application further provides a chip system. As shown in FIG. 21, the chip system includes at least one processor 2101 and at least one interface circuit 2102. The processor 2101 and the interface circuit 2102 may be interconnected through a line. For example, the interface circuit 2102 may be configured to receive a signal from another apparatus. For another example, the interface circuit 2102 may be configured to send a signal to another apparatus (for example, the processor 2101). For example, the interface circuit 2102 may read instructions stored in a memory, and send the instructions to the processor 2101. When the instructions are executed by the processor 2101, the electronic device may be enabled to perform the steps performed by the electronic device in the foregoing embodiments. Certainly, the chip system may further include another discrete component. This is not specifically limited in this embodiment of this application.

Optionally, there may be one or more processors in the chip system. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps in the methods disclosed with reference to embodiments of this application may be directly performed and completed by a hardware processor, or may be performed and completed by using a combination of hardware in the processor and a software module.

An embodiment of this application further provides a computer storage medium. The computer storage medium stores computer instructions. When the computer instructions are run on an electronic device, the electronic device is enabled to perform the method in the foregoing method embodiments.

An embodiment of this application provides a computer program product. The computer program product includes a computer program or instructions. When the computer program or the instructions are run on a computer, the computer is enabled to perform the method in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the method in the foregoing method embodiments.

The electronic device, the computer storage medium, the computer program product, or the chip provided in embodiments is configured to perform the corresponding method provided above. Therefore, for beneficial effect that can be achieved by the electronic device, the computer storage medium, the computer program product, or the chip, refer to the beneficial effects of the corresponding method provided above. Details are not described herein.

Based on the foregoing descriptions of the implementations, a person skilled in the art may understand that for convenient and brief description, division into the foregoing functional modules is merely used as an example for description. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. Embodiments may be combined or referenced with each other without conflict. The described apparatus embodiment is merely an example. For example, division into the modules or the units is merely logical function division. In actual implementation, another division manner may be used. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may be one physical unit or a plurality of physical units, that is, may be located at one position, or may be distributed at a plurality of different positions. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for indicating a device (which may be a single-chip microcomputer, a chip, or the like) or a processor (processor) to perform all or some of the steps in the methods in embodiments of this application. The storage medium includes any medium that can store program code, for example, a USB flash drive, a removable hard disk, a read-only memory (read-only memory, ROM), a random access memory (random access memory, RAM), a magnetic disk, an optical disc, or the like.

The foregoing content is merely specific implementations of this application, but the protection scope of this application is not limited thereto. Any variation or replacement readily figured out by a person skilled in and familiar with the art within the technical scope disclosed in this application shall fall within the protection scope of this application. Therefore, the protection scope of this application shall be subject to the protection scope of the claims.

## Claims

1. A cross-device resource sharing method, applied to a first electronic device having a display screen, wherein the method comprises:
when a first interface of a first application is displayed, sending an indication message to at least one electronic device in response to a detected resource sending gesture, wherein first content is displayed in the first interface, the resource sending gesture indicates the first electronic device to share a resource with another electronic device, the resource sending gesture is a gesture performed without coming into contact with the display screen of the first electronic device, and the indication message indicates that the first electronic device is about to share a resource; and
sending the first content to a second electronic device in the at least one electronic device based on a communication connection to the second electronic device.

2. The method according to claim 1, wherein the method further comprises:
when a second interface of the first application is displayed, sending the indication message to the at least one electronic device in response to the detected resource sending gesture, wherein the second interface is different from the first interface; and
sending a screenshot of the second interface to the second electronic device in the at least one electronic device based on the communication connection to the second electronic device.

3. The method according to claim 1 or 2, wherein the method further comprises:
when an interface of a second application is displayed, sending the indication message to the at least one electronic device in response to the detected resource sending gesture, wherein the second application is different from the first application; and
sending a screenshot of the interface to the second electronic device in the at least one electronic device based on the communication connection to the second electronic device.

4. The method according to any one of claims 1 to 3, wherein sending the first content to the second electronic device in the at least one electronic device based on the communication connection to the second electronic device comprises:
sending the first content to the second electronic device in the at least one electronic device based on the communication connection to the second electronic device, and sending the first content to a third electronic device in the at least one electronic device based on a communication connection to the third electronic device.

5. The method according to any one of claims 1 to 4, wherein sending the first content to the second electronic device in the at least one electronic device based on the communication connection to the second electronic device comprises:
establishing the communication connection to the second electronic device based on the indication message; and
sending the first content to the second electronic device based on the communication connection.

6. The method according to claim 5, wherein the resource sending gesture comprises a start gesture and an end gesture, the start gesture indicates a start of execution of the resource sending gesture, and the end gesture indicates an end of execution of the resource sending gesture; and before sending the first content to the second electronic device based on the communication connection, the method further comprises:
generating preview data of the first content when the start gesture is detected; and
sending the preview data of the first content to the second electronic device based on the communication connection.

7. The method according to claim 6, wherein sending the indication message to the at least one electronic device in response to the detected resource sending gesture comprises:
sending the indication message to the at least one electronic device in response to detecting the start gesture and the end gesture.

8. The method according to claim 6 or 7, wherein the method further comprises:
when the start gesture is detected, displaying a gesture icon corresponding to the start gesture; or
displaying a gesture movement animation effect when it is detected that the end gesture moves out from a front of the first electronic device, wherein the gesture movement animation effect comprises an animation effect of movement of a light shadow on the display screen.

9. The method according to claim 8, wherein a direction in which the light shadow moves on the display screen is the same as a direction in which the end gesture moves out from the front of the first electronic device.

10. The method according to any one of claims 1 to 9, wherein after detecting the resource sending gesture, the method further comprises:
displaying a first to-be-sent animation effect, wherein the first to-be-sent animation effect comprises at least one of: a card generated based on the first content and a light shadow.

11. The method according to any one of claims 1 to 10, wherein in a process of sending the first content to the second electronic device, the method further comprises:
displaying a sending animation effect, wherein the sending animation effect comprises at least one of: the preview data of the first content and a light shadow; and/or
displaying a target control, wherein the target control indicates sending progress of the first content.

12. The method according to any one of claims 2 to 11, wherein after detecting the resource sending gesture, the method further comprises:
displaying a second to-be-sent animation effect, wherein the second to-be-sent animation effect comprises at least one of: a screenshot of the second interface and a light shadow.

13. The method according to any one of claims 1 to 12, wherein system accounts logged in to on the first electronic device and the second electronic device are different, and before sending the first content to the second electronic device, the method further comprises:
displaying a reminder message when no trust relationship is established between the first electronic device and the second electronic device, wherein the reminder message is used to confirm with a user at least one of the following: whether to send the first content to the second electronic device and whether to establish a trust relationship with the second electronic device; or
skipping displaying a reminder message when a trust relationship is established between the first electronic device and the second electronic device, wherein the reminder message is used to confirm with a user at least one of the following: whether to send the first content to the second electronic device and whether to establish a trust relationship with the second electronic device.

14. The method according to claim 2 or 3, wherein the first electronic device comprises an air sharing service, and the air sharing service is used to provide an application, registering with the air sharing service, in the first electronic device with a function of sharing a resource in the application with another electronic device; and the first application is an application registering with the air sharing service, the first interface of the first application is a preset interface in which the air sharing service is available, and the second interface of the first application is a preset interface in which the air sharing service is unavailable; or the second application is an application that does not register with the air sharing service.

15. The method according to any one of claims 1 to 14, wherein the resource sending gesture comprises a palm-to-fist gesture.

16. A cross-device resource sharing method, applied to a second electronic device having a display screen, wherein the method comprises:
receiving an indication message from a first electronic device, wherein the indication message from the first electronic device indicates that the first electronic device is about to share a resource; and
receiving first content from the first electronic device based on a communication connection to the first electronic device in response to the indication message from the first electronic device and a detected resource receiving gesture, wherein the resource receiving gesture is a gesture performed without coming into contact with the display screen of the second electronic device, and the first content is content in a first interface that is of a first application and that is displayed by the first electronic device.

17. The method according to claim 16, wherein the method further comprises:
receiving a screenshot of a second interface from the first electronic device based on the communication connection to the first electronic device in response to the indication message from the first electronic device and the detected resource receiving gesture, wherein the screenshot of the second interface is a screenshot of a second interface that is of the first application and that is displayed by the first electronic device, and the second interface is different from the first interface.

18. The method according to claim 16 or 17, wherein the method further comprises:
receiving a screenshot of an interface from the first electronic device based on the communication connection to the first electronic device in response to the indication message from the first electronic device and the detected resource receiving gesture, wherein the screenshot of the interface is a screenshot of an interface that is of a second application and that is displayed by the first electronic device, and the second application is different from the first application.

19. The method according to any one of claims 16 to 18, wherein before receiving the first content from the first electronic device, the method further comprises:
receiving an indication message from a third electronic device, wherein the indication message from the third electronic device indicates that the third electronic device is about to share a resource; and
receiving the first content from the first electronic device based on the communication connection to the first electronic device in response to the indication message from the first electronic device and the detected resource receiving gesture comprises:
receiving the first content from the first electronic device based on the communication connection to the first electronic device in response to the indication message from the first electronic device, the indication message from the third electronic device, and the detected resource receiving gesture, wherein system accounts logged in to on the first electronic device and the second electronic device are the same; or system accounts logged in to on the first electronic device and the second electronic device are different, and the first electronic device is an electronic device selected by a user.

20. The method according to any one of claims 16 to 19, wherein before receiving the first content from the first electronic device, the method further comprises:
detecting the resource receiving gesture at a first frequency when the indication message from the first electronic device is not received; and
detecting the resource receiving gesture at a second frequency when the indication message from the first electronic device is received, wherein the second frequency is greater than the first frequency.

21. The method according to any one of claims 16 to 20, wherein the resource receiving gesture comprises a start gesture and an end gesture, the start gesture indicates a start of execution of the resource receiving gesture, and the end gesture indicates an end of execution of the resource receiving gesture; and before receiving the first content from the first electronic device based on the communication connection to the first electronic device, the method further comprises:
establishing the communication connection to the first electronic device in response to the detected start gesture.

22. The method according to any one of claims 16 to 21, wherein the resource receiving gesture comprises the start gesture and the end gesture, the start gesture indicates the start of execution of the resource receiving gesture, and the end gesture indicates the end of execution of the resource receiving gesture; and the method further comprises:
when the start gesture is detected, displaying a gesture icon corresponding to the start gesture; or
displaying a gesture movement animation effect when it is detected that the start gesture moves in from a front of the second electronic device, wherein the gesture movement animation effect comprises an animation effect of movement of a light shadow on the display screen.

23. The method according to claim 22, wherein a direction in which the light shadow moves on the display screen is the same as a direction in which the start gesture moves in from the front of the second electronic device.

24. The method according to any one of claims 21 to 23, wherein before receiving the first content from the first electronic device, the method further comprises:
in response to the indication message from the first electronic device, when the end gesture is detected, receiving preview data of the first content from the first electronic device based on the communication connection to the first electronic device.

25. The method according to claim 24, wherein the method further comprises:
displaying a receiving animation effect in a process of receiving the first content, wherein the receiving animation effect comprises at least one of: the preview data of the first content and a light shadow.

26. The method according to any one of claims 16 to 25, wherein the system accounts logged in to on the first electronic device and the second electronic device are different, and before receiving the first content from the first electronic device, the method further comprises:
displaying a reminder message when no trust relationship is established between the first electronic device and the second electronic device, wherein the reminder message is used to confirm with the user at least one of the following: whether to receive the first content from the first electronic device and whether to establish a trust relationship with the first electronic device;
or
skipping displaying a reminder message when a trust relationship is established between the first electronic device and the second electronic device, wherein the reminder message is used to confirm with the user at least one of the following: whether to receive the first content from the first electronic device and whether to establish a trust relationship with the first electronic device.

27. The method according to any one of claims 16 to 26, wherein the resource receiving gesture comprises a fist-to-palm gesture.

28. An electronic device, comprising a processor, a memory, a communication interface, and a display screen, wherein the memory, the display screen, and the communication interface are coupled to the processor, the communication interface is configured to communicate with another device, the memory is configured to store program code, the program code comprises instructions, and the processor reads the instructions from the memory, to enable the electronic device to perform the method according to any one of claims 1 to 15, or to enable the electronic device to perform the method according to any one of claims 16 to 27.

29. A computer-readable storage medium, wherein the computer-readable storage medium comprises a computer program, and when the computer program is run on an electronic device, the electronic device is enabled to perform the method according to any one of claims 1 to 15, or the electronic device is enabled to perform the method according to any one of claims 16 to 27.

30. A computer program product, wherein the computer program product comprises a computer program or instructions, and when the computer program or the instructions are run on a computer, the computer is enabled to perform the method according to any one of claims 1 to 15, or the computer is enabled to perform the method according to any one of claims 16 to 27.

31. A communication system, comprising a first electronic device and a second electronic device, wherein the first electronic device is configured to perform the method according to any one of claims 1 to 15, and the second electronic device is configured to perform the method according to any one of claims 16 to 27.
